Europäisches Patentamt

European Patent Office

Office européen des brevets

(19)

(11) Veröffentlichungsnummer: **0 258 892 B1**

(12) **EUROPÄISCHE PATENTSCHRIFT**

(45) Veröffentlichungstag der Patentschrift: 07.08.91

(51) Int. Cl.⁵: **F16D 43/206**, F16D 7/06

(21) Anmeldenummer: 87112855.9

(22) Anmeldetag: 03.09.87

Teilanmeldung 90113827.1 eingereicht am
03/09/87.

(54) Überlastkupplung.

(30) Priorität: 05.09.86 DE 8623878 U

(43) Veröffentlichungstag der Anmeldung:
09.03.88 Patentblatt 88/10

(45) Bekanntmachung des Hinweises auf die
Patenterteilung:
07.08.91 Patentblatt 91/32

(84) Benannte Vertragsstaaten:
DE FR GB IT

(56) Entgegenhaltungen:

| | |
|---|---|
| DE-A- 3 208 182 | DE-C- 1 270 371 |
| DE-C- 3 009 224 | DE-C- 3 151 485 |
| FR-A- 1 048 595 | FR-A- 1 198 302 |
| GB-A- 462 587 | GB-A- 895 881 |
| GB-A- 1 160 416 | US-A- 3 722 644 |
| US-A- 4 220 230 | |

(73) Patentinhaber: **Girguis, Sobhy Labib**
**Magdalenenstrasse 19**
**W-5210 Troisdorf 14(DE)**

(72) Erfinder: **Girguis, Sobhy Labib**
**Magdalenenstrasse 19**
**W-5210 Troisdorf 14(DE)**

(74) Vertreter: **Grosse, Dietrich, Dipl.-Ing. et al**
**Patentanwälte HEMMERICH-**
**MÜLLER-GROSSE-POLLMEIER-MEY Hammer-**
**strasse 2**
**W-5900 Siegen 1(DE)**

EP 0 258 892 B1

## Beschreibung

Die Erfindung betrifft eine Überlastkupplung nach der Gattung des Patentanspruches. Eine derartige Kupplung ist in der DE-C-3 009 224 mit unterschiedlichen Varianten dargestellt.

Eine solche Überlastkupplung kann als Abschaltkupplung ausgeführt werden, bei der nach Ausrücken der Kupplungskörper infolge Überschreitens des Nennmomentes die beiden Hauptkörper der Überlastkupplung sich unbegrenzt gegeneinander zu verdrehen vermögen. Infolge der Federbelastung der Kupplungskörper verbleibt auch nach Abschalten der Kupplung ein reibungsbedingtes Restmoment, so daß die Kupplung durch Rückwärtsdrehen des antreibenden ihrer Hauptkörper wieder einschaltbar ist. Die Kupplung kann allerdings auch so ausgebildet werden, daß, bspw. durch Angriff der vorspannenden Feder über Lager, das Restmoment gegen Null geht und ein Wiedereinschalten durch Rückwärtsdrehen des antreibenden Hauptkörpers nicht möglich ist.

Andererseits kann die Überlastkupplung als Sperrkupplung ausgeführt sein, bei der nach Überschreiten des Nennmomentes die beiden Hauptkörper sich nur um einen begrenzten Winkelbetrag gegeneinander verdrehen können und die Kupplung dann formschlüssig "gesperrt" wird, so daß sie nach Überschreiten des Nennmomentes beliebige bzw. die tatsächlich auftretenden Drehmomente zu übertragen vermag, auch wenn diese das Nennmoment überschreiten. Die kurze gegenseitige Verdrehung der Hauptkörper wird hierbei üblicherweise zur Auslösung eines Signales, bspw. für das Abschalten des Antriebes, genutzt.

Weiterhin kann die Überlastkupplung als Impulskupplung ausgebildet werden, wobei nach Überschreiten des Nennmomentes der angetriebene Hauptkörper weiter umläuft, jedoch mit einem etwa dem Nennmoment entsprechenden Wechseldrehmoment.

Die Überlastkupplung kann auch als sogenannte Synchronkupplung ausgeführt werden, deren Wiedereinschaltung nur in einer oder mehreren diskreten relativen Drehpositionen zwischen den beiden Hauptkörpern möglich ist. Solche Überlastkupplungen werden bspw. für Schlittenantriebe von NC-gesteuerten Werkzeugmaschinen mit nur einer Drehposition bzw. einer $360_0$-Teilung oder innerhalb einer Kreuzgelenkwelle mit zwei Drehpositionen bzw. mit einer $180_0$-Teilung eingesetzt. Hierbei ist die Teilung der Ausnehmungen der Anzahl der Drehpositionen anzupassen.

Bei der Überlastkupplung nach der DE-C-3 009 224 ist bei einem der Ausführungsbeispiele ein als separates Teil ausgeführter, Führungslöcher für die Kupplungskörper aufweisender Käfig vorgesehen, der einerseits einen gesonderten Herstellungsaufwand erfordert und andererseits die Kupplungskörper mittig in einer Zone umfaßt, welche sich für die Momentenübertragung als günstig erwiesen hat, und die bei der Anwendung eines solchen Käfigs hierfür nicht einsetzbar ist. Die die Federkraft übertragende Druckscheibe ist hierbei entsprechend dem Ring eines Axialkugellagers geformt. Befinden sich nun Kugeln zwischen der Umlaufbahn dieser Druckscheibe und einer Umlaufbahnstrecke des abstützenden Hauptkörpers, so ist der Widerstand gegen ein unbeabsichtigtes Verdrehen der Kugel zurück in ihre Ausnehmungen, das durch Ungenauigkeiten, Stöße gegen Drehanschläge, Vibrationen usw. ausgelöst werden kann, infolge der geringen vorliegenden Wälzreibung nur gering. Zwischen den Kugeln und der Druckscheibe ist weiterhin praktisch nur ein Linienkontakt mit entsprechender Übrtragungskakazität wirksam.

Bei einer anderen Ausführung einer Überlastkupplung nach der DE-A-3 208 182 werden die als Kupplungskörper vorgesehenen Kugeln in Öffnungen einer zwischen den Hauptkörpern vorgesehenen Führungsplatte in vorgegebenen Teilungsabständen gehalten. Die Führungsplatte deckt hierbei jedoch einen beachtlichen Teil der Höhe der Kugeln, insbesondere deren mittlere Höhenbereiche, ab, so daß die in eingerücktem Zustande der Kugeln von den Ausnehmungen aufgenommenen Bereiche derselben einer unerwünscht flachen konischen Zone entsprechen und die den Kugeln gebotenen Angriffswinkel entsprechend gering ausfallen. Dieses begrenzt die übertragbare Leistung unvorteilhaft und erfordert nachteilig hohe Federkräfte. Zusätzlich wird unerwünscht viel Raum im Bereiche der Kupplungskörper ausschließlich für Führungszwecke der Kugeln benötigt, so daß sich eine unvorteilhaft geringe Leistungsdichte ergibt. Zwar wird sich wohl nach dem Ausrücken der Kupplung im wesentlichen eine Wälzreibung ergeben, der axiale Platzmangel zwischen der Druckscheibe und den Hauptkörpern jedoch erlaubt offensichtlich nur eine punktförmige Berührung und Abstützung der Kugeln durch die Druckscheibe. Hohe Drehmomente lassen sich mit erträglichem Aufwand auf diese Weise nicht übertragen.

Auch die GB-A-1 160 416 zeigt eine Überlastkupplung, bei der die als Kupplungskörper vorgesehenen Kugeln in einer diese in Öffnungen aufnehmenden Führungsplatte gehalten sind, wobei durch die Form der Öffnungen erreicht werden soll, daß nach dem Ausrasten der Kupplung die Kupplungskörper aus dem Bereiche der Drehmomente übertragenden Öffnungen geführt werden, um ein dauerndes Ratschen zu vermeiden. Auch hier deckt die Führungsplatte den wesentlichen mittleren Höhenbereich der Kugeln ab, so daß diese nur mit Kalotten geringer Höhe und damit Auflageflächen geringer Neigung in die Drehmomente übermitteln-den Öffnungen der Hauptkörper einzugreifen vermögen und damit ebenfalls nur relativ geringe Momente übertragen können. Auch diese Überlastkupplung baut für vorgesehene Nennmomente unvorteilhaft groß und gestattet nur geringe Leistungsdichten.

In der DE-C-3 009 224 wird eine weitere Abschaltkupplung offenbart, bei der jeder Kupplungskörper aufnehmenden Ausnehmung zwei einander gegenüberliegende, als Taschen ausgebildete und durch Anschläge begrenzte Umlaufstrecken zugeordnet sind, welche Kupplungskörper nach dem Abschalten aufgrund einer Überlast aufnehmen und tragen. Infolge ihrer Ausdehnung sowie ihrer Anzahl beanspruchen diese Taschen eine große Umfangslänge, die für die Aufnahme weiterer Kupplungskörper ausfällt, so daß die verfügbare Leistungsdichte einer solchen Kupplung unvorteilhaft begrenzt wird.

In der DE-A-3 208 182 wird weiterhin eine Einrichtung zur Begrenzung der Drehung eines Käfigs zu einem der Hauptkörper offenbart, die einen in einer Aussparung wirksamen Stift aufweist. Hier können zwar die Umlaufstrecken kürzer ausgelegt werden, so daß eine höhere Anzahl von Kupplungskörpern anwendbar wäre, die zur Begrenzung vorgesehene Einrichtung jedoch beansprucht zusätzlichen radialen Raum, so daß als Kupplungskörper nur Kugeln geringen Durchmessers einsetzbar sind. Da die Übertragungsleistung solcher Kugeln dem Quadrat ihres Durchmessers proportional ist, ergibt auch eine solche Ausführung nur unerwünscht begrenzte Leistungsdichten. Darüber hinaus läßt sich die Einrichtung zur Begrenzung der Bewegung für höhere Drehzahlen nicht anwenden, da die Schwungmasse des Käfigs mit Kugeln nur prallartig abfangbar ist.

Eine weitere Abschaltkupplung nach der DE-C-3 009 224 erlaubt eine weitgehende Reduktion des Drehmomentes nach dem Abschalten aufgrund einer Überlast. Die symmetrisch ausgebildete Überlastkupplung läßt sich zwar in beiden Drehrichtungen einsetzen, als Nachteil aber erweist sich beim Wiedereinschalten der Kupplung durch Rückwärtsdrehen eines Hauptkörpers, daß als Kupplungskörper vorgesehene Kugeln von einer Tasche in die gegenüberliegende verbracht werden können, ohne in die zwischen diesen angeordnete Ausnehmung einzudringen, so daß dem Versuch des Wiedereinrückens oft der Erfolg versagt bleibt. Hierdurch wird ein Wiedereinschalten unnötig kompliziert, und auch der den Antrieb Betreuende wird zumindest irritiert: Aber auch wenn er den Fehler rechtzeitig erkannt hat, muß gegebenenfalls der Antrieb mehrfach reversiert werden, um eine Wiedereinschaltung zu erreichen. Insbesondere bei einer automatischen Steuerung ist die hierfür erforderliche Programmierung außerordentlich aufwendig.

Der gleichen Druckschrift ist auch eine Variante einer Synchron-Überlastkupplung zu entnehmen, bei der durch eine ungleiche Teilung der Ausnehmungen ein Wiedereinrasten der Kupplungskörper in die Hauptkörper nur in einer oder mehreren gegebenen Drehpositionen möglich ist. Eine solche ungleiche Teilung der Ausnehmungen ist ebenfalls mit einer unvorteilhaft starken Reduktion der Leistungsdichte zu erkaufen.

In dieser Druckschrift ist weiterhin eine Impulskupplung beschrieben, bei der eine Einsteuerung eines Käfigs auf die mittlere Geschwindigkeit der Hauptkörper durch ein Planetengetriebe erreicht wird. Da die Kupplungskörper im Bereiche der Ausnehmungen ohnedies formschlüssig gesteuert werden, liegt damit eine Überbestimmung vor, und als besonders nachteilig erweist es sich, daß eine solche Lösung einen nachteilig hohen Raumbedarf aufweist und unvorteilhaft hohe Herstellungskosten bedingt.

Die Erfindung geht von der Aufgabe aus, die aufgeführten Nachteile zu beheben und eine Überlastkupplung zu schaffen, die eine Begrenzung der Umlaufbahnen der Kupplungskörper vorzunehmen gestattet, welche mit einer hohen Leistungsdichte verbunden ist, die mit relativ einfachen Mitteln kostengünstig herstellbar ist und zuverlässig zu arbeiten vermag, und die bei unterschiedlichen Anwendungszwecken angepaßten Varianten weitgehend einander entsprechende Bauteile einsetzt, so daß eine rationelle Konstruktion und Fertigung auch bei unterschiedlichen Ausbildungen möglich wird und bei vorgegebenem Nennmoment geringe Abmessungen erreichbar sind.

Gelöst wird diese Aufgabe durch die Merkmale der Patentansprüche 1 bzw. 2, welche es gestatten, die Anzahl von zur Begrenzung bzw. zum Auslenken vorgesehener Anschläge zu senken bzw. auf 1 zurückzuführen, so daß durch Volumeneinsparung gegenüber entsprechenden bekannten Ausführungen die Leistungsdichte erhöht wird. Der nach Anspruch 4 verwendete Käfig erlaubt eine genaue Führung der Kupplungskörper, ohne auf eine zumindest bereichsweise wirksame Wälzlagerung zu verzichten, und er erweist sich als raumsparend und kostengünstig herstellbar. Die verwendeten Anschläge erlauben eine exakte Positionierung der Kupplungskörper, so daß die vorgesehenen Funktionen, insbesondere beim Wiedereinschalten, auf kurzen Wegen und sicher erreicht werden. Hierbei werden nicht nur Fertigungstoleranzen und ggfs. erfolgter Verschleiß ausgeglichen, bspw. durch gleichzeitiges Einrücken der Kupplungskörper wird auch die Übertragungskapazität der Kupplung vorteilhaft erhöht. Durch die mögliche Positionierung der Kupplungskörper durch Anschläge werden höchste Sicherheit, Zuverlässigkeit und Belastbarkeit der Kupplung mit einfachen, raumsparenden und wohlfeilen, leicht und günstig unterbringbaren Elementen erreicht.

Zweckmäßige und vorteilhafte Weiterbildungen der Erfindung sind in den Unteransprüchen gekennzeichnet. Hiernach können den Umlauf der Wälzkörper steuernde Anschläge direkt in den Weg der Wälzkörper eingreifen oder aber in den Umlaufweg des durch Ausrücken der geführten Kupplungskörper gegen die Kraft der vorspannenden Feder angehobenen Käfigs. Dieser Käfig läßt eine Sicherung der relativen Lage als Kugeln ausgebildeter Kupplungskörper zu, ohne deren Wirksamkeit zu beeinträchtigen, wenn für jede der Kugeln eine Vertiefung vorgesehen ist, welche die Kappe der Kugel aufnimmt. Eine Wälzlagerung in gewissen Grenzen läßt sich hierbei erreichen, wenn die Vertiefungen die Kappen der Kugeln unter Einhaltung eines Spieles einschließen. Vorteilhaft sind sie kalottenförmig ausgebildet, wobei der Radius der Kalotten den der Kugeln überschreitet.

Den Weg von Kupplungskörpern einschränkende Begrenzungsanschläge können in einer der Ausnehmungen eines Hauptkörpers vorgesehen sein. Anschläge können in Bewegungsrichtung rampenartig oder schraubenlinienförmig schräg ansteigend ausgeführt sein, um Aufprallimpulse zu unterbinden und das Auffangen des Käfigs oder eines Kupplungskörpers auf eine gewisse Bremsstrecke zu übertragen. Auch Kupplungskörper unter Spiel am Käfig haltende Vertiefungen können Anschläge dämpfen. Im Bedarfsfalle lassen sich auch mehr als nur ein Anschlag verwenden. Nach Anspruch 3 vorgesehene Anschläge ermöglichen die Ausnutzung aller Ausnehmungen zum Einbringen von Kupplungskörpern in Verbindung mit einer Dämpfung nach Anspruch 7. Ferner lassen sich in gleicher Weise den Käfig sperrende Begrenzungsanschläge wie, mit nur geringem Mehraufwand, den Käfig nur in extrem angehobener Stellung beeinflussende Abstreifanschläge verwenden. Zur Vereinheitlichung der Hauptkörper einer Baugröße können nach Anspruch 6 dessen in den Umlaufbahnen vorgesehene Ausnehmungen in gleicher Teilung ausgebildet werden, wobei ein erforderlich werdender Begrenzungsanschlag in eine der Ausnehmungen einsetzbar ist. Werden, bspw. für eine Sperrkupplung, höhere Belastungen erforderlich, so können mehrere Sperrkörper eingebaut werden; um eine größtmögliche Anzahl von Sperrkörpern nutzbar zu machen, sind die Unterbrechungen der Umlaufbahnen einander gegenüberliegend anzuordnen. Ist eine koaxiale Drehmomentübertragung zwingend, so sind die Unterbrechungen paarweise diametral entgegengesetzt anzuordnen. Die Trägerkörper können aber auch mit am Käfig angebrachten Bremsanschlägen entsprechend Anspruch 3 ausgestattet sein. Beide Ausführungen erlauben es, eine Überlastkupplung nach dem Ausrasten mit einem zweiten, höheren Drehmoment zu betreiben, indem entsprechende Anzahlen von Anschlägen vorgesehen werden.

Eine Überlastkupplung nach Anspruch 8 ermöglicht eine kraft-, aber auch eine formschlüssige Kopplung des Käfigs mit einem Hauptkörper nach dem Auftreten einer Überlast. Besonders vorteilhaft ist dieses bei drehschwingungsempfindlichen Anordnungen, da dort eine entsprechende Schwingungsamplitude in der entgegengesetzten Drehrichtung zu einer ungewollten Wiedereinschaltung der Überlastkupplung und somit zu erheblichen Stoßmomenten führen kann.

Auslenkanschläge nach Anspruch 9 gestatten eine formschlüssige Sicherung des vom Kupplungskörper beim Rückwärtsdrehen zum Zwecke des Wiedereinrastens zurückgelegten Weg. Der Käfig und/oder die Kupplungskörper werden nach einem Teilweg des Wiedereinrückvorganges bis zu einem Teilabsenken in die Ausnehmungen aufgefangen, wenn diese Teilabsenkung nicht bereits vor Erreichen des Anschlages aufgetreten war. Für eine Impulskupplung können solche Abstreifanschläge für beide Teilkörper vorgesehen sein, um ein Einrücken in vorgegebenen Lagen beider zu sichern.

Eine Klinkenfreilaufeinrichtung nach Anspruch 11 bietet die Möglichkeit der selbsttätigen Wiedereinschaltung einer Überlastkupplung durch Rückwärtsdrehen des antreibenden Hauptkörpers auch dann, wenn das Restmoment vernachlässigbar klein ist. Diese Einrichtung kann weiter als Teileinrichtung oder Positioniereinrichtung eingesetzt werden, indem die Anzahl der Klinken bzw. der diesen zugeordneten Nute entsprechend ausgelegt wird. Ferner kann eine besonders schonende Wiedereinschaltung einer Überlastkupplung erreicht werden, wenn die Sperrkörper jeweils zwei Flanken von Ausnehmungen durch Federkraft sanft auseinanderdrücken.

Die Teileinrichtungen nach Ansprüchen 12 bis 14 können unabhängig von den Kupplungskörpern ausgeführt werden: Werden ein oder mehrere Zähne und diese aufnehmende Nute am Käfig und einem Hauptkörper angebracht, so dreht beim Wiedereinschalten der Zahn so lange über der die Nut aufweisenden Stützfläche, bis er einzurasten vermag. Durch Anzahl und Anordnung lassen sich gewünschte Wiedereinschaltpositionen festlegen. Bspw. bei einer 360$^\circ$-Teilung und nur einem Zahn erfolgt eine asymmetrische Belastung des Käfigs. Durch mehrere, vorzugsweise symmetrisch angeordnete Zähne lassen sich auch symmetrische Belastungen erreichen, wobei durch die Art der Teilung oder die Abstützung innerhalb unterschiedlicher radialer Ringebenen die Einschaltmöglichkeit in nur einer Position gewahrt bleibt. Eire solche Teilung kann aber auch direkt mit den Kupplungskörpern wirksam werden, indem eine ungleiche Anzahl oder Teilung der Ausnehmungen für eine Wiedereinrückbarkeit in nur vorgegebenen Positionen sorgt.

Die Bildung von Druckräumen nach Anspruch 15 läßt bereits dann, wenn sich in diesen Druckräumen nur ein Druckmedium ohne Druckmittelzufuhr befindet, eine Dämpfung zu. Bei größeren Ausführungen von Überlastkupplungen und insbesondere dann, wenn Kupplungskörper in ihren Ausnehmungen spielfrei aufgenommen werden, ist eine Dämpfung oft wünschenswert, und ohne eine solche Dämpfung wären Beschädigungen der Kupplungskörper oder der sie aufnehmenden Ausnehmungen durch den Prall einer Wiedereinschaltung nicht auszuschließen, wie auch eine Lärmbelästigung nicht vermeidbar ist. Durch Aufnahme eines geeigneten Druckmediums in eine der Kammern dagegen läßt sich deren Dämpfungswirkung nutzen. Durch bewußtes Einbringen von Druckmittel läßt sich entweder die vorspannende Feder ersetzen oder aber eine mechanische Feder in ihrer resultierenden Wirkung konstant oder kurzfristig ändern. Ebenso ist es möglich, nach Anspruch 17 Anschläge oder Riegel von Rast- und Riegelvorrichtungen hydraulisch oder pneumatisch zu betätigen.

Bei einer Überlastkupplung nach Anspruch 18 ist eine Winkelnachgiebigkeit zwischen den Hauptkörpern möglich. Die belasteten Flächen der Ausnehmungen wirken hierbei im Sinne schräger Bahnen eines Gleichlaufgelenkes, wobei die Kupplungskörper mit dem Käfig in die winkelhalbierende Ebene geführt werden. Die hier vorgesehenen Anschläge sind in Form und Höhe so zu gestalten, daß die gegenseitigen möglichen Bewegungen der Hauptkörper berücksichtigt werden. Gegebenen falls kann durch eine solche Ausbildung auf eine zusätzliche nachgiebige Kupplung verzichtet werden.

Der Einsatz einer Überlastkupplung für den Antrieb drehender Werkzeuge mit axialem Vorschube erlaubt nur einen Schutz gegen unzulässige Belastungen in Drehrichtung. Eine nach Anspruch 19 ausgebildete Kupplung ergibt zusätzlich einen Schutz in Vorschubrichtung, der sich insbesondere dann als zweckmäßig erweist, wenn bei Abschaltung infolge Überschreitens des Nennmomentes der Vorschub des Werkzeuges zumindest temporär noch weiter wirksam ist. Die gezeigte, sowohl gegen Drehmoment-als auch Axialkraftüberlastung schützende Überlastkupplung hilft damit, Schäden am Werkzeug, am Werkstück, an dessen Spannvorrichtung oder der Bearbeitungsmaschine zu vermeiden. Die gezeigte Überlastkupplung gibt den gewünschten Schutz unabhängig davon, ob zunächst eine Drehmoment-oder eine Axialkraft-Überlastung vorliegt. Eine zusätzliche unabhängige Vorschub-Schutzeinrichtung ist nicht mehr erforderlich.

Eine zwischen Hauptkörper und Käfig eingesetzte, z.B. mit der Kraft der Kupplungsfeder beaufschlagte reibschlüssige Bremse bringt zunächst eine Erhöhung des Nennmomentes mit sich. Nach einer Überlast wirkt das volle Drehmoment der Bremse zwischen den Teilen im Sinne eines Restmomentes, welches die antriebsseitig noch laufenden Teile einer Anlage oder Maschine zum Stillstand zu bringen vermag. Das Restmoment kann bis zur Höhe des Nennmomentes, aber auch eines Mehrfachen desselben im Sinne einer Sperrkupplung festgelegt werden. Die Begrenzungsanschläge sind diesem Restmoment entsprechend in Anzahl und Ausbildung auszulegen. Es können aber auch andere Bremsausführungen, z.B. hydrodynamische oder magnetische Bremsen, mit ihren jeweiligen Kennfeldern eingesetzt werden.

Die Kupplungskörper lassen sich auch als am Umfang wulstartig oder halbkugelartig ausgebildete Rollen ausführen; ihre axiale Verschiebbarkeit auf einem sie aufweisenden Zapfen sorgt dafür, daß etwaige Rundlaufgenauigkeiten der Umlaufbahnen und Ausnehmungen ausgleichbar sind.

Im einzelnen sind die Merkmale der Erfindung anhand der Beschreibung von Ausführungsbeispielen in Verbindung mit diese darstellenden Zeichnungen erläutert. Es zeigen hierbei:

Figur 1
im axialen Halbschnitt schematisch eine Abschalt-Überlastkupplung,

Figur 2
schematisch einen Abschnitt einer Abwicklung der Bahnen einer Überlastkupplung mit Begrenzungs- und Auslenkanschlägen in Verbindung mit einer mehrphasigen Darstellung von Kupplungskörpern,

Figur 2a
im abgebrochenen Schnitt eine praktische Ausführung eines Anschlages,

Figur 3
schematisch und abgebrochen sowie unter Berücksichtigung mehrerer Arbeitsphasen weitere, auf einen Kupplungskörper aufweisenden Käfig einwirkende Begrenzungs- und Auslenkanschläge,

Figur 4
im axialen Halbschnitt eine weitere Abschalt-Überlastkupplung,

Figur 4a
einen abgebrochenen Teilschnitt zur schematischen Darstellung einer formschlüssigen Arretierung des Käfigs einer Abschalt-Überlastkupplung,

Figuren 5a bis 5c
drei Phasenbilder zur schematischen Darstellung einer Klinkenfreilaufeinrichtung,

Figur 6

den Axialschnitt einer synchron einrückbaren Abschalt-Überlastkupplung,

Figur 7

vergrößert und abgebrochen einen Einrückzahn und eine diesen aufnehmende Nut einer synchron einrückbaren Abschalt-Überlastkupplung,

Figur 8

im axialen Halbschnitt eine Impuls-Überlastkupplung mit einer direkt und, alternativ, einer über den Käfig wirksamen Auslenkvorrichtung,

Figur 9

im axialen Halbschnitt eine axiale Neigungen zulassende Abschalt-Überlastkupplung, und

Figur 10

im Halblängsschnitt eine Abschalt-Überlastkupplung mit einem auf die Axialkraft ansprechenden Überlastschutz.

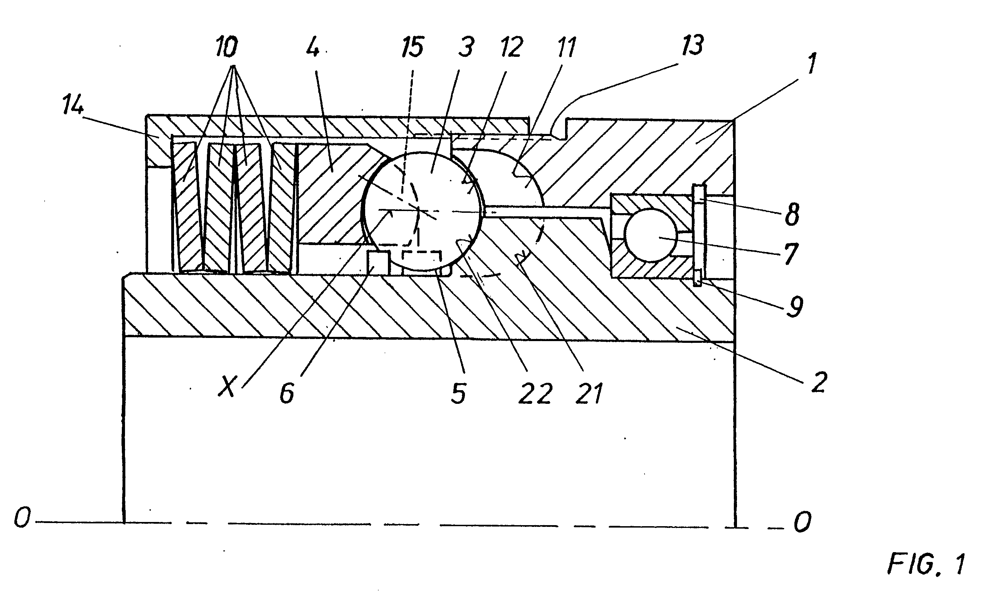

In der Fig. 1 ist im axialen Halbschnitt eine abschaltende Überlastkupplung gezeigt, deren Abtriebskörper 1 mittels eines durch Sicherungsringe 8 und 9 fixierten Wälzlagers 7 auf einem Antriebskörper 2 axial fixiert und gelagert ist. Der Antriebskörper 2 kann bspw. auf einem Wellenende eines Motors oder eines antreibenden Getriebes vorgesehen sein, und der Abtriebskörper 1 kann über Kupplungen, über aufgesetzte Kettenräder, Stirnzahnräder oder Keilriemenscheiben mit einem anzutreibenden Aggregat verbunden werden. Die Antriebsverhältnisse sind jedoch ohne weiteres umkehrbar, so daß auch der Abtriebskörper 1 antreibbar ist und der Antriebskörper 2 den Abtrieb zu vermitteln vermag.

Sowohl der Abtriebskörper 1 als auch der Antriebskörper 2 weisen Umlaufbahnen 12 bzw. 22 auf, die sich über einen kurzen Spalt einander gegenüberstehen, und in die Ausnehmungen 11 bzw. 21 eingearbeitet sind. Als Kupplungskörper sind Kugeln 3 vorgesehen, die über einen Käfig 4 sowohl vorgespannt als auch in vorgegebener Teilung gehalten werden: Teile der Kugeln werden jeweils in kalottenartigen Vertiefungen 15 des Käfigs gehalten; zur Verringerung der Reibung ist der Radius der kalottenförmigen Vertiefungen 15 geringförmig größer gehalten als der Radius der Kugeln 3. Der Käfig 4 wird von Tellerfedern 10 elastisch gegen die Ausnehmungen 11 bzw. 21 vorgespannt. Die Tellerfedern werden von einem durch ein Gewinde 13 des Abtriebskörpers 1 getragenen Federgehäuse 14 abgestützt, so daß die Federspannung durch Verdrehen des Federgehäuses 14 im Gewinde 13 einstellbar ist.

Im Ausgangszustand sind die Kupplungskörper 3 unter Einwirkung der Tellerfedern 10, abweichend von der Darstellung der Fig. 1, bis auf den Grund der Ausnehmungen 11 bzw. 21 vorgeschoben, und sie verbinden den Antriebskörper 2 formschlüssig mit dem Abtriebskörper 1, so daß beim Antrieb des Antriebskörpers 2 der Abtriebskörper 1 mitgenommen wird und nachgeordnete Einrichtungen anzutreiben vermag.

Übersteigt das von den angetriebenen Einrichtungen aufgenommene Moment das Nennmoment der gebildeten Überlastkupplung, so drücken die in Richtung der Umlaufbahnen 12 bzw. 22 gelegenen Flanken der Ausnehmungen 11 bzw. 21 die Kugeln 3 aus diesen Ausnehmungen heraus in die in Fig. 1 dargestellte Lage. Da im Ausführungsbeispiel die Umlaufbahn 12 in bezug auf die Vorspannkraft der Tellerfedern 10 auf geringfügig tieferem Niveau liegt als die Umlaufbahn 22 rollt nunmehr die über den Käfig 4 vorgespannte Kugel auf Abschnitten der Umlaufbahn 22 ab. Sie nimmt hierbei den Käfig 4 mit, der sich damit innerhalb seines Federgehäuses 14 mit halber Geschwindigkeit dreht. Diese Verdrehung zwischen dem Käfig 4 einerseits und dem Abtriebskörper 1 und dem mit ihm verbundenen Federgehäuse 14 andererseits bewirkt eine Drehreibung zwischen den Tellerfedern 10, die damit den Käfig 4 mit einem Reibmoment belasten. Im vorliegenden Falle einer wieder einschaltbaren Abschalt-Überlastkupplung wird der Weg der Kugeln 3 zwangsläufig durch einen Begrenzungsanschlag 5 begrenzt, der im Wege der auf einer Umlaufbahn 22 aufliegenden Kugel vorgesehen ist. Ergänzt wird der Begrenzungsanschlag durch einen zusätzlichen Auslenkanschlag 6.

Die Ausnehmungen 11 bzw. 21 der Umlaufbahnen 12 bzw. 22 sind jeweils symmetrisch ausgebildet und entlang der Umlaufbahnen in gleichmäßiger Teilung angeordnet. Da die Kugeln im Käfig formschlüssig geführt werden, genügt es, einen Begrenzungsanschlag 5 vorzusehen, der den Weg einer der Kugeln 3 begrenzt, die über den Käfig 4 auch den der anderen Kugeln 3 begrenzt. Der Begrenzungsanschlag 5 ist gegenüber einer Ausnehmung 21 vorgesehen, so daß diese keine Kugel 3 aufzunehmen vermag und zur Übertragung des Drehmomentes nicht heranzuziehen ist. Dementsprechend ergeben sich für bspw. zwölf entlang der Umlaufbahn 22 vorgesehenen Ausnehmungen 21 ein Begrenzungsanschlag 5, und der Käfig vermag bis zu elf Kugeln 3 aufzunehmen.

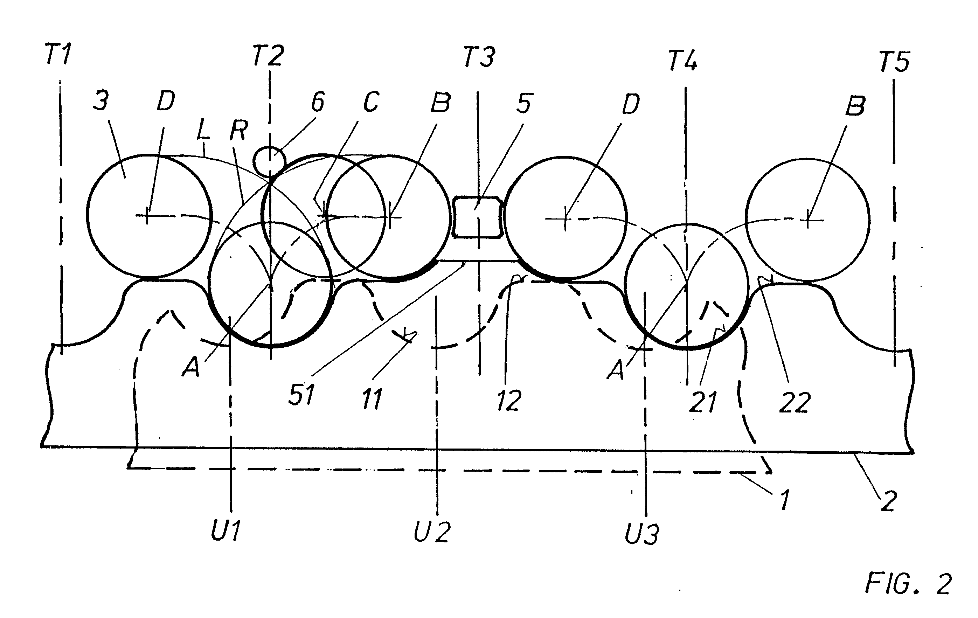

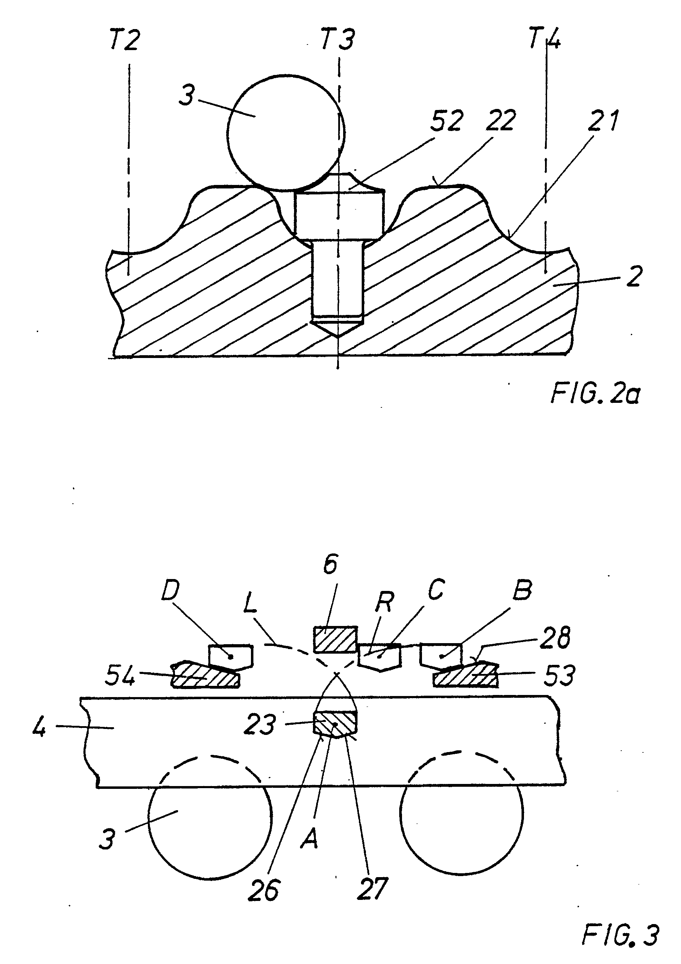

Im einzelnen wird die Auswirkung anhand der Fig. 2 erläutert, bei der die Abwicklung der dem Spalt zugewandten, Umlaufbahn 22 und Ausnehmungen 21 aufweisenden zylindrischen Fläche des Antriebskörpers mit 2 bezeichnet und in ausgezogenen Linien dargestellt, und die ihr gegenüberstehende Fläche des Abtriebskörpers 1, ebenfalls abgebrochen, gestrichelt gezeigt und mit 1 bezeichnet ist. Die Laufbahnen 12 bzw. 22 dieser abgewickelten Begrenzungskurven sind in gleichen Teilungsabständen T bzw. U durch Ausnehmungen 11 bzw. 21 unterbrochen. Es wird davon ausgegangen, daß zunächst im Wirkzustande der Kupplung die Teilungslinien T1 und U1, T2 und U2 usf.

einander ebenso überdecken wie jeweils Ausnehmungen 11 und 21. Der Begrenzungsanschlag 5 wird hierbei nicht wirksam, und die als Kupplungskörper vorgesehenen Kugeln sind jeweils in koinzidierende Ausnehmungen 11 und 21 in der mit A bezeichneten Phase eingerückt und verbinden Antriebskörpers 2 und Abtriebskörper 1 formschlüssig miteinander. Bei der Überschreitung des Nennmomentes steht bspw. der Abtriebskörper 1 der Fig. 1 ebenso still wie die gestrichelte Kurve 1 der Fig. 2; entsprechend dem weiter drehenden Antriebskörper 2 jedoch ist die ausgezogenen dargestellten Kurve 2 weiter nach links vorgeschoben, so daß die Teilungslinie T1 der Kurve 2 nunmehr links von der Teilungslinie U1 der festgehaltenen Kurve 1 steht. Hierbei wurden die Kugeln 3 durch die Flanken der Ausnehmungen 11 aus den Ausnehmungen 21 ausgehoben und nach Erreichen der Umlaufbahn 22 auf dieser bis in die Phase B weitergerollt, in der die aus der Teilungsebene T2 herausgedrehte Kugel sich in der Phase B gegen den mit dem Antriebskörper 2 verbundenen Begrenzungsanschlag 5 legt. Über den in der Fig. 2 nicht dargestellten Käfig werden auch die übrigen Kugeln 3 in einer solchen Phase B festgehalten, wie es zwischen den Teilungsebenen 4 und 5 dargestellt ist.

Zum Wiedereinschalten der Kupplung ist deren Drehrichtung umzukehren. Der Antriebskörper 2 bzw. die Kurve 2 bewegt sich damit in der Fig. 2 aus der dargestellten Stellung nach rechts zurück, so daß die über den Käfig durch die Federn 10 der Fig. 1 belasteten Kugeln 3 auf der Laufbahn 22 zurückrollen und bei der nächsten Koinzidenz der Ausnehmungen 11 und 21 in diese Ausnehmungen zurückzukehren vermögen und damit die abgeschaltete Kupplung wieder wirksam machen. Hierbei besteht jedoch die Gefahr, daß die Kugeln 3 nach dem Abrollen von der Laufbahn 22 die folgende Ausnehmung 21 durch einen Abschnitt der Laufbahn 12 überbrückt finden und nicht in koinzidierende Ausnehmungen abzusinken vermögen, sondern direkt in die Phase D gelangen. Hier wird zwar die aus der Teilungsebene T4 stammende Kugel in Phase D durch die gegenüberliegende Anschlagfläche des Begrenzungsanschlages 5 aufgefangen, die Kupplung jedoch wäre nicht eingeschaltet. Um ein solches direktes Hinübergleiten einer Kugel aus der Phase B in die Phase D zu vermeiden, ist der Auslenkanschlag 6 vorgesehen. Er greift in eine mögliche direkte Bewegungsbahn zwischen den Phasen B und D ein, so daß der Rücklauf einer Kugel 3 aus der Phase B in einer Zwischenphase C durch den Auslenkanschlag begrenzt wird, bis die Kugel nach unten in koinzidierende Ausnehmungen 11 und 21 einlaufen kann. Damit wird aufgabengemäß eine direkte Überführung von Kugeln 3 aus Phasen B in Phasen D ebenso unterbunden wie das direkte Erreichen der Phase B von der Phase D aus. Die Bewegungsspielbahnen der Kugeln sind damit auf Bewegungsräume R bzw. L beschränkt.

Beim Ausrücken der Kupplung aus der gegensinnigen Drehrichtung rollen die Kugeln aus den Phasen A in die Phasen B, und beim Wiedereinschalten rollen sie in die Phase A zurück, gegebenenfalls zwischenzeitlich kurzzeitig in einer mit C bezeichneten Zwischenphase vom Auslenkanschlag gehalten.

Ein Begrenzungsanschlag 5 kann, wie in Fig. 2 dargestellt, als gesonderter, bspw. am Antriebskörper 2 vorgesehener, Anschlag 5 ausgebildet sein. Es ist aber auch möglich, zur Begrenzung der Kupplungskörper die Umlaufbahn 22 in der entsprechenden Position in einem Bereich 51 höher auszuführen als an den übrigen Stellen. Als fertigungstechnisch einfacher jedoch erweist es sich, gemäß Fig. 2a einen Begrenzungsanschlag als Bolzen 52 auszuführen, der in eine Bohrung einer Ausnehmung 21 eingelassen wird. Die Kontur des Kopfes des Bolzens ist hier so gewählt, daß eine an dem Kopf des Bolzens sich auflegende Kugel bereits die Ebene der Laufbahn 22 verlassen hat und im oberen Bereich der Flanke der den Bolzen aufweisenden Ausnehmung 21 aufliegt, so daß die derart aufgefangene Kugel unter Einwirkung der Tellerfedern 10 einer Rastwirkung unterliegt. Derartige einsetzbare Bolzen 52 gestatten es, von gleichen Bauteilen auszugehen und Anschläge wahlweise dem Antriebs- oder dem Abtriebskörper zuzuordnen.

Als vorteilhaft kann es sich auch erweisen, Begrenzungs- und Auslenkanschläge nicht direkt auf die Kupplungskörper einwirken zu lassen, sondern auf den diese haltenden Käfig 4. In Fig. 3 ist, wiederum als abgebrochene Abwicklung, in der Seitenansicht ein Abschnitt eines Käfigs 4 gezeigt, der in Vertiefungen als Kupplungskörper vorgesehene Kugeln 3 führt. Mit dem Käfig 4 ist ein radial auskragender Anschlag 23 verbunden, dessen Unterseite zwei gegeneinander geneigte Rampen 26 und 27 aufweist. Auch mit dem Antriebskörper 2 oder dem Abtriebskörper 1 verbundene Begrenzungsanschläge 53 und 54 sind mit Rampen 28 ausgestattet. Beim Überschreiten des Nennmomentes mag der die Begrenzungsanschläge 53 und 54 aufweisende, hier nicht dargestellte Abtriebskörper 1 stillstehen, und die an Flanken von Ausnehmungen hochlaufenden Kugeln 3 drücken den Käfig 4 entsprechend der Bewegungsbahn R sowohl aufwärts und auch nach rechts, bis der aus der Phasenstellung A herausgehobene Anschlag 23 in der Phasenlage B sich mit seiner Rampe 27 auf die Rampe 28 des Begrenzungsanschlages 53 legt. Dieses Auflegen und Arretieren erfolgt nur gedämpft, da, bedingt durch den Reibwert, die Länge und Schräge der Rampen sowie die Kraft der Kupplungsfedern sich diesen zugeordnete Brems- bzw. Dämpfungswerte ergeben. Bei der Bewegungsumkehr zum Wiedereinrücken der Überlastkupplung wird der Anschlag 23 vom Begrenzungsanschlag 53 abgehoben und in umgekehrter Drehrichtung entlang der Bewegungsbahn R geführt. Vermögen die Kugeln 3 nicht sofort in entsprechende Vertiefungen einzudringen, so wird der am Käfig 4 vorgesehene Anschlag 23 in der Zwischenphase C vom Auslenkanschlag 6 kurzzeitig festgehalten, bis er beim Eindringen der Kugeln 3 in die Phase A zurückzukehren vermag und die Überlastkupplung wieder wirksam ist. Beim Abschalten aus der umgekehrten Drehrichtung läuft der Anschlag 23 auf den Begrenzungsanschlag 54 in Phase D auf.

Um ein Verkanten des Käfigs auch beim Auffangen desselben sicher zu unterbinden, sind zweckmäßig mehrere, mindestens zwei, Anschläge 23 mit mit ihnen zusammenwirkenden Begrenzungsanschlägen 53 und 54 sowie Auslenkanschlägen 6 in gleichmäßiger Teilung vorgesehen. Die dargestellten relativ flachen Rampen 26 bis 28 gestatten nicht nur ein nachgiebiges, gedämpftes Auffangen des bzw. der Anschläge 23, bei übergroßen Kräften ist es auch möglich, auf ein sofortiges Auffangen zu verzichten, so daß bspw. der Anschlag 23 den Begrenzungsanschlag 53 überläuft und erst vom folgenden der Begrenzungsanschläge festgehalten wird, so daß übergroße Auffangkräfte und damit Überlastungen der Anschläge sicher vermieden werden. Die in der Abwicklung der Fig. 3 als keilförmige Rampen 26 bis 28 dargestellten Auflaufflächen sind beim Ausführungsbeispiel entsprechend ihrer Krümmung schraubenlinienartig gewundene Flächen.

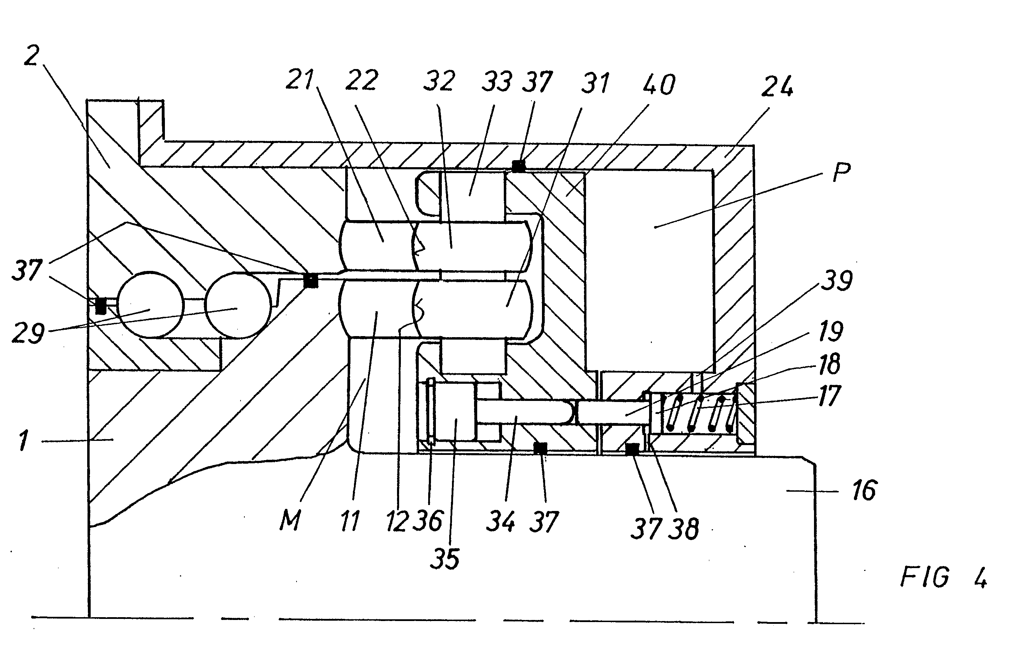

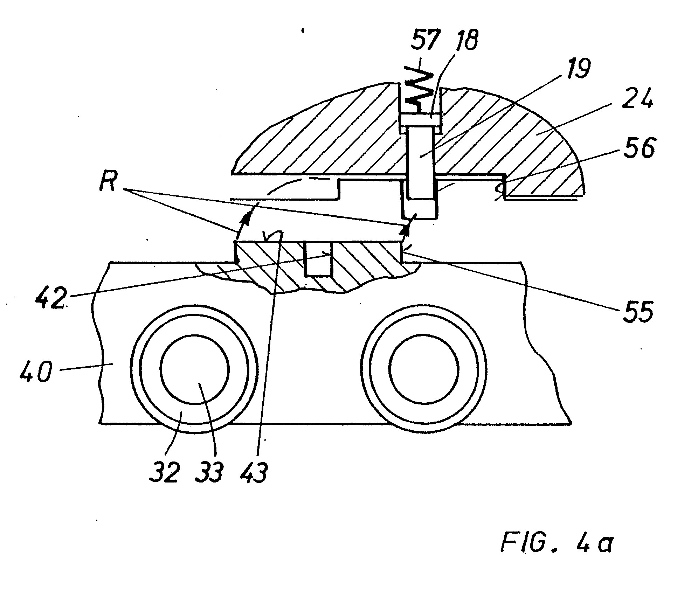

Eine weitere Abschalt-Überlastkupplung ist in Fig. 4 dargestellt. Auf einem Abtriebskörper 1 ist vermittels von Wälzkörpern 29 ein Antriebskörper 2 gelagert, der mit einem Mantel 24 verbunden ist. Auf einem den Abtriebskörper 1 aufweisenden Wellenzapfen 16 ist innerhalb des Mantels 24 ein Käfig 40 verschiebbar, der ringkolbenartig einen Druckraum P gegen einen Druckraum M abschließt. Der Käfig 4 ist mit radial angeordneten Bolzen 33 ausgestattet, auf denen als Kupplungskörper vorgesehene Rollen 31 und 32 sowohl drehbar als auch in Achsrichtung de r Bolzen 33 geringfügig verschiebbar gelagert sind. Die ballig ausgeführten Mantelflächen der Rollen 31, 32 laufen auf Umlaufbahnen 12, 22 und vermögen in Ausnehmungen 11 bzw. 21 derselben einzugreifen, um den Antriebskörper 2 mit dem Abtriebskörper 1 zu verbinden.

In einer Ausnehmung des Mantels 24 ist ein durch eine Druckfeder 17 belasteter Kolben 18 parallel zur Achse der Welle 16 derart verschiebbar, daß seine Kolbenstange 19 in eine Bohrung des Käfigs 40 einzutreten vermag, in der die Kolbenstange 34 eines Kolbens 35 verschieblich ist, dessen Zylinderbohrung frei in den Druckraum M führt. Begrenzt ist der Hub des Kolbens durch einen in die Zylinderbohrung eingesetzten Sicherungsring 36. Vermittels von Dichtungen 37 sind beidseitig der Wälzkörper 29 der Abtriebskörper 1 und der Antriebskörper 2 gegeneinander abgedichtet, und weitere Dichtungen 37 dichten den Käfig 40 gegen die Welle 16 und den Mantel 24 ab, der durch eine weitere Dichtung 37 gegen die Welle 16 abgedichtet ist. Beidseitig des Kolbens 18 führen Kanäle 38 und 39 ins Freie bzw. zum Druckraum P.

Wenn auch die Vorspannung des Käfigs 40 und damit der als Kupplungskörper vorgesehenen Rollen 31 und 32 allein durch ein Druckmittel, bspw. Pneumatisch, bewirkt werden kann, hat es sich doch bewährt, eine Grundvorspannung durch in den als Ringkammer ausgeführten Druckraum P eingebrachte Federn zu bewirken. Zusätzlich in den Druckraum P eingebrachtes Druckmittel steigert dann die auf den als Ringkolben ausgebildeten Käfig 40 ausgeübte Kraft, während eine Druckbeaufschlagung des Druckraumes M einen Teil der Federkraft aufhebt und damit den Käfig 40 entlastet. Damit können durch Wahl bspw. eines in den Druckraum P eingebrachten Tellerfederpaketes eine Grundvorspannung und damit ein dieser entsprechende Basis-Nennmoment der Überlastkupplung festgelegt werden, das durch Druckmittelbeaufschlagung in weiten Grenzen und relativ schnell abgeändert werden kann, ohne einen direkten Eingriff in die Kupplung vorzunehmen zu müssen.

In der Fig. 4 ist die dargestellte Abschalt-Überlastkupplung in ihrer Abschaltstellung gezeigt: Die als Kupplungskörper vorgesehenen Rollen 31, 32 sind aus den Ausnehmungen 11, 21 auf die Umlaufbahnen 12, 22 hochgelaufen, und die als Begrenzungsanschlag wirkende Kolbenstange 19 ist arretierend in eine Bohrung des Käfigs 14 eingetreten.

Für das Wiedereinschalten der Überlastkupplung wird ein gegebenenfalls im Druckraum P anstehender Druck reduziert, und der Druckraum M wird mit, gegebenenfalls weiterem, Druckmittel versorgt. Hierbei wird auch der Boden des Kolbens 35 mit steigendem Druck beaufschlagt, und der nach rechts geführte Kolben 35 schiebt mittels seiner Kolbenstange 34 die Kolbenstange 19 des Kolbens 18 zurück, bis die aufeinanderliegenden Enden der beiden Kolbenstangen 34 und 19 in der Trennfuge zwischen Mantel 24 und Käfig 40 stehen. Damit ist die Verriegelung zwischen dem Käfig 40 und dem Mantel 24 des Antriebskörpers 2 aufgehoben. Beim Rückwärtsdrehen eines der Körper der Kupplung vermögen die sich abwälzenden Rollen 31, 32 in die Ausnehmungen 11 und 21 einzutreten und damit den Antriebskörper mit dem Abtriebskörper zu verbinden. Das in der Druckmittelkammer M noch anstehende Druckmittel wirkt hierbei als den Käfig 40 abstützendes Druckkissen, so daß der Käfig äußerst sanft in seine vermittels der Rollen 31, 32 das Drehmoment vermittelnde Wirklage zurückgeführt werden kann.

Die dargestellte Verriegelung kann vielfach variiert werden. So könnten Kolbenstange 34 und Kolben 35 entfallen, und die Kolbenstange 19 könnte zur Ent- oder Verriegelung unmittelbar mechanisch oder elektrisch betätigt werden. Es besteht aber auch die Möglichkeit, bspw. nach Entfallen des Kolbens 35 mit Kolbenstange 34, jedoch unter Belassung der in Fig. 4 die Kolbenstange 34 führenden Bohrung, die Druckfeder 17 durch eine Zugfeder zu ersetzen, so daß die Kolbenstange 19 in ihrer Ruhestellung über die sie führende Bohrung nicht hervorsteht. Beim Abschalten der Überlastkupplung wird der als Ringkolben wirkende Käfig 40 spontan nach rechts verschoben, so daß das im Druckmittelraum P anstehende Druckmittel, gegebenenfalls unter normalem Druck stehende Luft, spontan komprimiert wird und über einen Kanal 39 die rechts dargestellte Seite des Kolbens 18 zu beaufschlagen vermag, so daß dieser in die dargestellte Lage verschoben wird und die Kolbenstange 19 in die ihr gegenüberstehende Bohrung des Käfigs 40 zur Verriegelung einzutreten vermag. Zur Entriegelung wird der in der Druckmittelkammer P anstehende Druck reduziert, so daß die dann vorgesehene Zugfeder den Kolben 18 mit der Kolbenstange 19 zurück und aus der Bohrung des Käfigs 40 herauszuziehen vermag. Eine Beeinträchtigung dieser Funktion wird durch eine ausreichende Entlüftung des linksseitig des Kolbens 18 gebildeten Zylinderraumes vermittels eines Kanales 38 erreicht.

Eine derartige Verriegelungsmöglichkeit, unterstützt durch weitere Begrenzungsanschläge, ist schematisch in einer abgebrochenen Abwicklung in Fig. 4a gezeigt. Der auf Bolzen 33 laufende, als Kupplungskörper vorgesehene Rollen 31, 32 aufweisende Käfig 40 weist einen Aufsatz auf, dessen Flanken 55 als Begrenzungsanschläge wirken, und ist mit Bohrungen 42 ausgestattet. Der Mantel 24 enthält einen unter Einwirkung einer Zugfeder 57 stehenden Kolben 18. Beim Abschalten der Kupplung wird der Käfig 40 in Richtung der Pfeile R nach rechts oben verlagert, so daß sein Begrenzungsanschlag 55 sich auf den Begrenzungsanschlag 56 des Mantels 24 ebenso legt, wie sich die Grundfläche der Erhöhung des Käfigs gegen die untere Grundfläche des Mantels 24 legt. Die wesentliche Energie wird hierbei von den Begrenzungsanschlägen 55, 56 aufgefangen, und der jenseits des Kolbens 18, wie zuvor beschrieben, ansteigende Druck schiebt die Kolbenstange 19 in die Bohrung 42 des Käfigs 40.

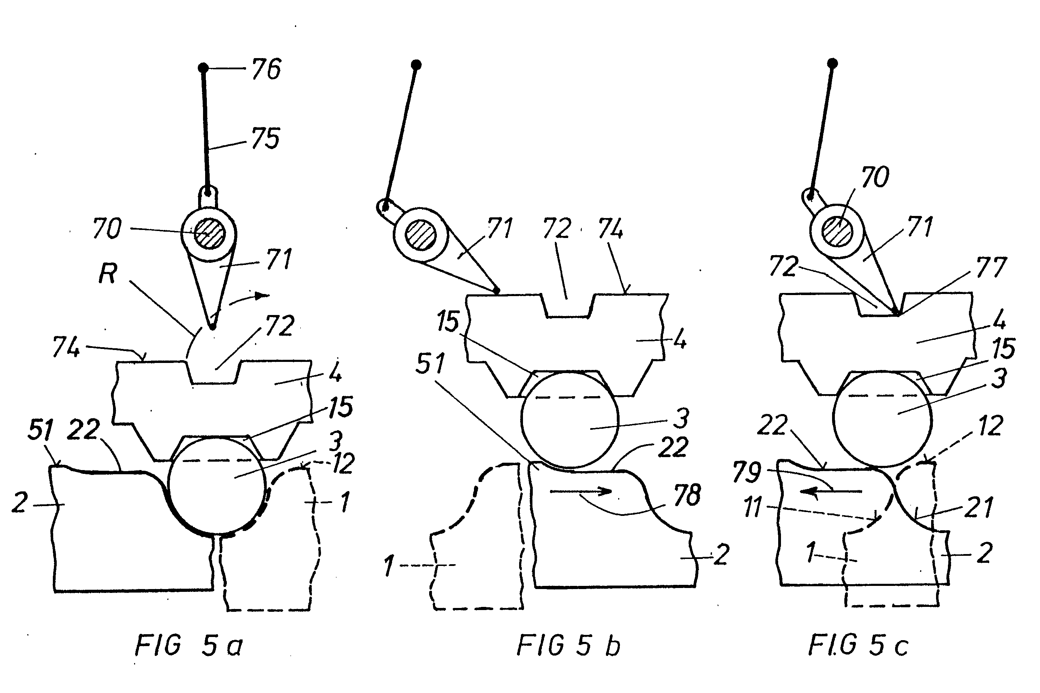

Es ist auch möglich, auf feste Anschläge zu verzichten und bewegliche Auslenkanschläge in Form von Klinken vorzusehen, die in beiden Richtungen wirksam werden und jeweils beim gegensinnigen Drehen im Sinne des Wiedereinschaltens wirksam werden. Derartige Einrichtungen empfehlen sich insbesondere für Abschalt-Überlastkupplungen, die nach dem Abschalten ein minimales Restmoment aufweisen. In den Fig. 5a bis 5c ist die Wirkungsweise einer solchen Anordnung in drei unterschiedlichen Phasen dargestellt.

In Fig. 5a sind, wiederum in Form abgebrochener, mit 1 und 2 bezeichneter Abwicklungen mit Ausnehmungen 11 und 21 versehene Umlaufbahnen 12 und 22 dargestellt. In Fig. 5a ist die eingeschaltete Kupplung gezeigt: In Vertiefungen 15 eines Käfigs 4 geführte Kugeln 3 dringen jeweils und gemeinsam in Ausnehmungen 11 und 21 beider Umlaufbahnen 12 und 22 ein und verbinden damit den Antriebskörper 2 mit dem Abtriebskörper 1 zur Übertragung der jeweils auftretenden Momente. In der Laufbahn 22 des Antriebskörpers 2 ist ein erhöhter Bereich 51 vorgesehen, der als Begrenzungsanschlag für Kugeln 3 dient, und mit dem Abtriebskörper 1 sind Zapfen 70 und Stifte 76 verbunden. Auf den Zapfen 70 sind schwenkbar jeweils Klinken 71 angeordnet, in die eine Zugfeder 75 eingehängt ist, deren gegenüberliegendes Ende vom Stift 76 gehalten ist. Beim Auftreten von das Nennmoment überschreitenden Drehmomenten drücken die gegeneinander vorgespannten Flanken der Ausnehmungen der Umlaufbahnen 12 und 22 die Kugeln nach oben aus diesen Ausnehmungen heraus, so daß auch der die Kugeln 3 stützende Käfig 4 bei nach rechts gerichteter Drehbewegung der abgewickelten Kurve 2 in Richtung des Pfeiles R nach oben und nach rechts bewegt wird. Die Klinken 71 greifen hierbei in in die Deckfläche 74 des Käfigs 4 eingearbeitete Nute 72 ein, werden aber im Verlaufe der mit R bezeichneten Bewegung des Käfigs 4 mit ihrem unteren Ende mitgenommen. Damit wird der Zustand der Fig. 5b erreicht: Die Kurve 1 steht still, und die Kurve 2 läuft in Richtung des Pfeiles 78 um. Die als Kupplungskörper vorgesehenen Kugeln 3 liefen entlang der Laufbahn 22 und wurden durch deren erhöhten Bereich 51 festgehalten. Bei der weiteren Bewegung des Käfigs 4, ebenfalls in Richtung des Pfeiles 78, gleiten die unteren Enden der Klinken 71 über die Deckfläche 74 des Käfigs 4 sowie die Nute 72 und stellen somit einen Freilauf dar.

In Verbindung mit der Fig. 5c werden die beim Wiedereinschalten der Überlastkupplung ablaufenden Vorgänge erläutert. Der Antriebskörper 2 wird in gegensinniger Richtung, in der Richtung des Pfeiles 79, bewegt. Hierbei laufen die Kugeln 3 vom erhöhten Bereich 51 über die Laufbahn 22 ab, und der ebenfalls in Richtung des Pfeiles 79 bewegte Käfig läuft nunmehr gegen die Spitze der Klinke 71 vor. Die Klinke fällt beim Passieren der Nut 72 in diese ein und wird von deren Kante 77 eingefangen, so daß der Käfig nunmehr in dieser Lage vom Abtriebskörper 1 über dessen Zapfen 70 festgehalten wird. Dieser Zapfen ist derart über der Ausnehmung 11 vorgesehen, daß Käfig und Kugel an der Flanke dieser Ausnehmung arretiert werden, bis durch weiteres Rückdrehen des Antriebskörpers 2 die Kugel in die dann in koinzidierende Stellungen einlaufenden Ausnehmungen 11 und 21 einzulaufen vermag. Die als Auslenkanschlag vorgesehene Klinkenanordnung läßt sich gleichzeitig als Teilvorrichtung einsetzen. Ist, vorzugsweise in Verbindung mit zwei Klinken 71, der Käfig mit zwei einander gegenüberliegenden Nuten 72 ausgestattet, so vermag die Kupplung nur in zwei um 180° einander gegenüberliegenden Stellungen einzurasten, und sind Klinke und Nut 72 nur jeweils einmal vorgesehen, so können die Kugeln 3 jeweils nur in ihre gleichen Ausnehmungen 11 einrücken, so daß eine nur eine Einschaltstellung zulassende Teilvorrichtung um 360° entsteht.

Durch das Einlaufen in erst in Koinzidenzstellung einlaufende Ausnehmungen 11 bzw. 21 wird eine schonende und sanfte Wiedereinschaltung erreicht, welche sich die Reibung sowie die Massenträgheit der der Überlastkupplung nachgeordneten, über sie gekoppelte Einrichtung als Bremswirkung zunutze macht.

In den Fig. 5a, 5b, 5c sind die die Kugeln 3 führenden Vertiefungen 15 abweichend von denen der Fig. 1 nicht kalottenartig ausgebildet, sondern als Hohl-Kegelstümpfe ausgeführt und in entsprechend kegelstumpfförmigen Ansätzen des Käfigs 4 vorgesehen. Die Kugeln können sich hierbei geringfügig senkrecht zur dem Käfig 4 vorspannenden Federkraft bewegen und werden dennoch ausreichend gehalten bzw. geführt. Sobald der den Kugeln in den kegelstumpfförmigen Vertiefungen gebotene Spielraum beim Abrollen ausgenutzt ist, sind weitere Wälzbewegungen der Kugeln nicht mehr möglich, und das weitere Bewegen der Kugeln erfolgt unter gleitender Reibung.

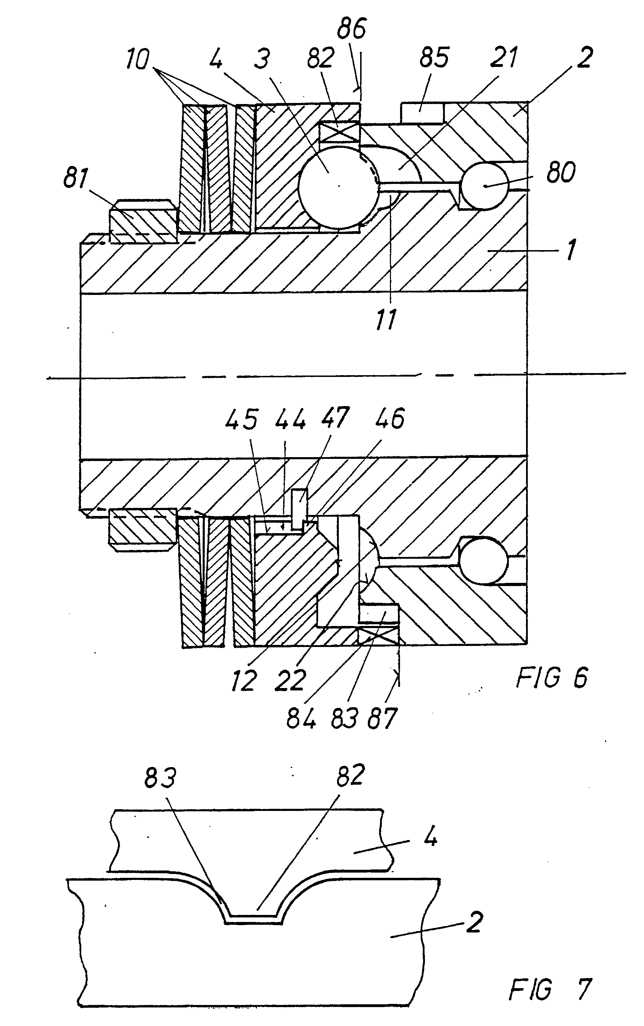

Ein weiteres Ausführungsbeispiel einer Abschalt-Überlastkupplung ist in Fig. 6 im Längsschnitt dargestellt. Auf einem Abtriebskörper 1 ist über Wälzkörper 80 ein Antriebskörper 2 gelagert. Ein einstellbarer Gewindering 81 hintergreift auf den Abtriebskörper 1 aufgeschobene Tellerfedern 10, die einen Käfig 4 vorspannen, in dem als Kupplungskörper vorgesehene Kugeln 3 geführt sind. Die Überlastkupplung der Fig. 6 ist im abgeschalteten Zustande dargestellt, in dem die Kugeln 3 aus den Ausnehmungen 11 und 21 der Umlaufbahnen 12 und 22 ausgehoben sind. Der Abtriebskörper 1 ist mit einem Begrenzungsanschlag 47 in Form eines eingesetzten Stiftes ausgestattet, der in eine Nut 45 des Käfigs 4 eingreift und durch Anschlag gegen deren Flanken den möglichen Schwenkwinkel zwischen dem Abtriebskörper 1 und dem Käfig 4 begrenzt. Ein in der Nut 45 angeordneter Auslenkanschlag 46 begrenzt diesen Schwenkweg zusätzlich.

Die von den Tellerfedern 10 ausgeübte Kraft spannt einerseits den Käfig 4 im Sinne eines Wiedereinrückens der Kugeln 3 vor. Die von dem Gewindering 81 aufgenommene Stützkraft spannt die Laufflächen der Wälzkörper 80 gegeneinander vor und bewirkt damit eine axiale Fixierung der Teile der Abschalt-Überlastkupplung. Um ein Wiedereinrücken der Überlastkupplung nur in einer vorgegebenen gegenseitigen Stellung von Antriebskörper 2 und Abtriebskörper 1 zu erreichen, ist der Käfig 4 mit Zähnen 82 und 84 ausgestattet, die in ihnen angepaßte Nute 83 und 85 des Antriebskörpers 2 einzugreifen vermögen. Um eine gleichmäßige Auslastung zu erhalten, sind die Zähne 82 und 84 um 180° gegeneinander versetzt angeordnet. Hierdurch würde sich an sich eine Teilung bzw. eine Wiedereinrückmöglichkeit nach jeweils 180° ergeben. Um jedoch bspw. auch mit symmetrisch angeordneten Zähnen eine 360°-Teilung zu erhalten, sind die Zähne 82 und 84 in unterschiedlichen Teilkreisen untergebracht, und um die Herstellung der Teile zu erleichtern, sind die Zähne 82 und 84 sowie die diese aufnehmenden Nute 83 und 85 jeweils axial gegeneinander versetzt.

Sind, wie in Fig. 6 dargestellt, durch einen Abschaltvorgang die Kugeln 3 aus den Ausnehmungen 11 bzw. 21 herausgedrückt, und ist der Käfig 4 dementsprechend gegen die Kraft der Tellerfedern 10 verschoben, so bleibt der Abtriebskörper 1 bei weiterem Antrieb des Antriebskörpers 2 stehen. Nach Auflaufen der Kugeln auf die Endstellung der Umlaufbahn fängt der Begrenzungsanschlag 47 durch Auflaufen auf eine Flanke 44 der Nut 45 den Käfig 4 auf, der nun ebenfalls steht. Zur Sicherstellung der Abschalt- und Wiedereinschaltfunktion der Überlastkupplung ist die Umlaufbahn 22 des Antriebskörpers 2 in bezug auf die Vorspannkraft der Tellerfedern 10 geringfügig höher ausgelegt als die Umlaufbahn 12 des Abtriebskörpers 1. Beim weiteren Durchlauf des Antriebskörpers 2 verbleibt daher ein geringes Restmoment in Verbindung mit einem geringfügigen Rattern der Kugeln 3 beim jeweiligen Erreichen von Ausnehmungen 21.

Wird nun zum Wiedereinschalten der Überlastkupplung der Antriebskörper 2 geringfügig rückgedreht, so steht der Abtriebskörper 1 dabei weiterhin still. Der Käfig 4 läuft mit seinen Kugeln 3 geringfügig zurück, bis er mittels seines Auslenkanschlages 46 vom Begrenzungsanschlag 47 aufgefangen wird. Bei der weiteren Drehung laufen die Zähne 82 und 84 über die Ebenen 86 und 87 des Antriebskörpers, bis sie ihre jeweils zugeordneten Nute 83 bzw. 85 erreichen und in diese einzutreten vermögen, wobei gleichzeitig auch die Kugeln 3 in die Ausnehmungen 11 und 21 eintreten, deren relative Stellung durch den Auslenkanschlag 46 gesichert wurde. Eine zweckmäßige Formgebung eines Zahnes 82 sowie einer diesen aufnehmenden Nut 83 ist in einer abgebrochenen Abwicklung in Fig. 7 im eingerückten, der Wirkstellung der Kupplung entsprechenden Zustande dargestellt. Zwischen dem Zahn 82 und der ihn aufnehmenden Nut 83 sind allseitig Zwischenräume vorgesehen, um die Übertragung der Drehmomente allein durch die Kupplungskörper zu bewirken und Zahn und Nut zu entlasten. Die Kontur der Flanken entspricht weitgehend der relativen Bewegung des Käfigs 4 in bezug auf den Antriebskörper 1 beim Abschalten bzw. Wiedereinrücken der Kupplung. Es können aber auch leichter zu bearbeitende, durch ebene Flächen gebildete Begrenzungen von Zahn und Nut verwendet werden, wenn diese sich aus den in Fig. 7 aufgezeigten Begrenzungen durch Materialabnahme erstellen lassen.

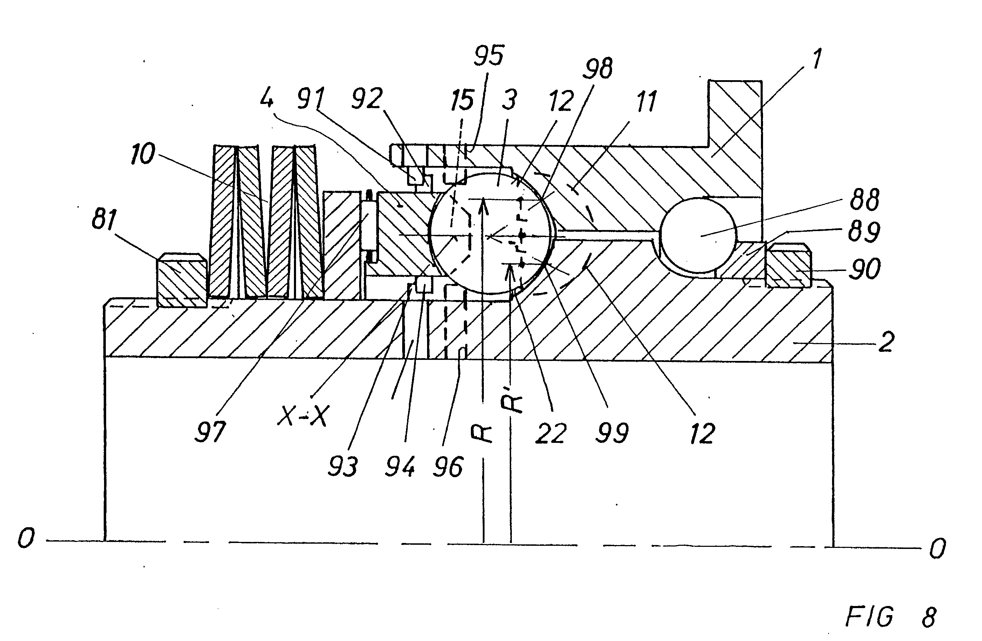

In der Fig. 8 ist im Halbschnitt eine Impuls-Überlastkupplung nach dem Abschalten infolge einer Überschreitung des Nennmomentes dargestellt. Von einer solchen Impuls-Überlastkupplung wird verlangt, daß beim Wiedereinrücken die Kupplungskörper praktisch gleichzeitig und prallfrei in die in Koinzidenzstellung gelangenden Ausnehmungen eintreten, so daß nicht nur ein Aufprall sowie ein durch diesen bedingter, Kupplungskörper kurzzeitig unwirksam machender Rückprall vermieden werden, sondern vielmehr beim Eindringen der Kupplungskörper in die Ausnehmungen diese an deren Flanken noch Entspannungsenergie der Federn abzugeben vermögen.

Voraussetzung hierfür ist, daß die als Umlaufkörper auch hier benutzten Kugeln mit gleichen Geschwindigkeiten auf den Umlaufbahnen 12 und 22 des Abtriebskörpers 1 und des Antriebskörpers 2 abrollen, so daß, betrachtet von einer der Achse 0-0 der Überlastkupplung parallelen Drehachse X-X der Kugeln 3 aus, sich der Antriebskörper 2 und der Abtriebskörper 1 mit gleichen Winkelgeschwindigkeiten in entgegengesetzten Richtungen bewegen.

Hierfür lassen sich die Umlaufbahnen 12 und 22 so ausbilden, daß sie die Kugeln im wesentlichen jeweils in einem Punkte 98 bzw. 99 abstützen. Die bei gleichen Winkelgeschwindigkeiten des Antriebskörpers 2 und des Abtriebskörpers 1 im Bereiche ihrer Punkte 98 und 99 erreichten Umlaufgeschwindigkeiten verhalten sich hierbei wie die entsprechenden Radien R und R' um die Achse 0-0, während die Umlaufgeschwindigkeiten der entsprechenden, durch diese Punkte 98 und 99 gegebenen Zonen einer Kugel 3 im Verhältnis der Radien r und r' dieser Punkte in bezug auf die Achse X-X der Kugeln stehen. Damit sind die Punkte 99 und 98 und damit die im wesentlichen tragenden Bereiche der Umlaufbahnen 22 und 12 so auszulegen, daß sich verhalten r/r' = R/R'. Dieses konstruktiv zu verwirklichende Verhältnis läßt sich jedoch nachträglich beeinflussen. Nach der Fig. 8 ist der Abtriebskörper 1 auf dem Antriebskörper 2 vermittels von Wälzkörpern 88 gelagert. Während in den Abtriebskörper 1 eine entsprechende Lagerschale fest eingearbeitet oder eingesetzt ist, verwendet der Antriebskörper 2 eine axial verschiebbare Lagerschale 89, die mittels eines Gewinderinges 90 fein einstellbar ist, so daß Herstellungstoleranzen, Verschleiß, Massenkräfte oder andere Einflüsse, welche den gewünschten Gleichlauf der Kugel stören könnten, durch Verstellen des Gewinderinges 90 ausgleichbar sind. Vorgespannt ist der die Kugeln 3 in Vertiefungen 15 aufnehmende Käfig 4 vermittels von den Antriebskörper 2 umgreifenden Tellerfedern 10, die vermittels eines Gewinderinges 81 einstellbar vorspannbar sind. Übertragen wird die Kraft der Tellerfedern 10 auf den Käfig über ein Wälzkörper 97 aufweisendes Lager, so daß nach dem Abschalten der Überlastkupplung seitens der Federn auf den Käfig 4 nur ein vernachlässigbar geringes Restmoment ausgeübt wird, und die reibschlüssige Steuerung der Kugeln 3 durch dieses nicht verfälscht wird.

Das fortlaufende Einbringen der Kugeln 3 in die Ausnehmungen 11 und 12 wird durch Auslenkvorrichtungen unterstützt und gesichert, die für beide Drehrichtungen vorgesehen sind: Der Käfig 4 weist beidseitig Anschläge 92 bzw. 94 auf, und sowohl der Antriebskörper 2 als auch der Abtriebskörper 1 sind jeweils mit einem Auslenkanschlag 91 bzw. 93 ausgestattet, die im Betriebe von unterschiedlichen Seiten her auf die Anschläge 92 bzw. 94 des Käfigs zulaufen und den Käfig aufhalten, falls dieser nicht unter Einwirkung der Tellerfedern 10 und unter Eindringen der Kugel 3 in Ausnehmungen 11 und 12 sich so nach rechts verschiebt, daß die Anschläge 92 bzw. 94 rechts neben den Auslenkanschlägen 91 und 93 zu passieren vermögen. Bei noch bestehender Überlast werden die Kugeln durch die Flanken der Ausnehmungen 11 bzw. 12 wieder aus denselben in die dargestellte Lage hineingedrückt, während bei entfallener Überlast die Kupplung durch Verbleiben ihrer Kugeln 3 in den Ausnehmungen wieder eingerastet wurde. Auch hier sind Varianten möglich: Wird die reibschlüssige Steuerung der Kugel so ausgelegt, daß diese stets vor- oder nacheilt, so genügt einer der Anschläge 92 bzw. 94 in Verbindung mit dem diesem zugeordneten der Auslenkanschläge 91 bzw. 93, um den Käfig abzufangen. Andererseits ist eine zweite Möglichkeit einer direkten Einflußnahme auf die Umwälzkörper durch Auslenkanschläge 95 und 96 aufgezeigt, die direkt in den Laufweg der Kugeln eingreifen. Auch hier ist bei gesteigerter oder abgesenkter Umlaufgeschwindigkeit der Kugeln nur einer dieser Anschläge vonnöten.

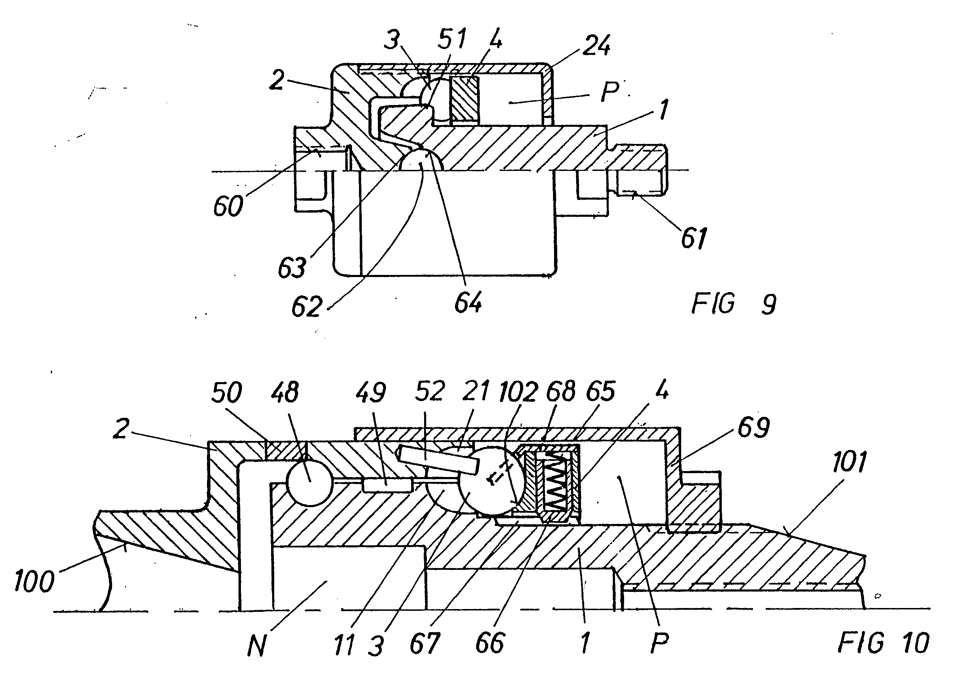

Eine weitere Abschalt-Überlastkupplung ist in Fig. 9 im Halbschnitt dargestellt. Ihr Aufbau erlaubt eine gewisse Neigung zwischen den Achsen des Antriebskörpers 2 und des Abtriebskörpers 1.

Der Antrieb des Antriebskörpers kann über einen Gewindeanschluß 60 erfolgen, während der Abtrieb vom Abtriebskörper 1 über einen Gewindestutzen 61 vornehmbar ist. Zur Lagerung des Abtriebskörpers ist ein Spurlager vorgesehen, dessen Spurkugel 62 in Pfannen 63 und 64 des Antriebskörpers 2 bzw. Abtriebskörpers 1 gehalten ist. Der Antriebskörper 2 ist von einem Mantel 24 überfangen, und der in Ausnehmungen als Kupplungskörper vorgesehene Kugeln 3 fassende Käfig 4 wird durch Tellerfedern vorgespannt, die in der Zeichnung nicht dargestellt und im Raum P vorgesehen sind, so daß sie sich gegen den Boden des Mantels 24 abstützen und über den Käfig 4 und die Kugeln 3 auch das Spurlager 62 bis 64 vorspannen. Der Antriebskörper 2 ist mit einem Begrenzungsanschlag 51 ausgestattet, dessen Breite die Verschiebungen berücksichtigt, die beim Neigen des Abtriebskörpers sich als Verschiebungen der Kugeln auswirken.

In Fig. 10 ist eine Abschalt-Überlastkupplung aufgezeigt, welche sowohl bei Überschreitung des Nennmomentes als auch beim Überschreiten einer vorgegebenen Axialkraft abzuschalten vermag. Damit kann diese Überlastkupplung bspw. auch benutzt werden, um bei Bohrmaschinen im Falle unzulässig hoher Axialkräfte, bspw. nach dem Stumpfwerden von Bohrern, abzuschalten.

Der Antriebskörper 2 sowie der Abtriebskörper 1 sind jeweils mit konischen Anschlüssen 100 sowie 101 für den Anschluß einer treibenden Welle bzw. einer Bohrspindel versehen. Zur Lagerung des Abtriebskörpers 1 im Antriebskörper 2 ist vermittels von Kugeln 48 ein Schrägkugellager gebildet, das durch ein Radial-Nadellager 49 ergänzt ist. Die Kugeln 48 können über eine mit einem Deckel 50 verschließbare Füllöffnung eingegeben werden. Der Antriebskörper 2 ist mit einem Begrenzungsanschlag 52 versehen, der in die Bewegungsbahn der als Umwälzkörper vorgesehenen Kugeln 3 eingreift. Diese Kugeln 3 werden in einer Laufbahn 102 eines Käfigs 4 geführt, der mit einem axial verschiebbaren, durch eine Druckfeder 65 vorgespannten Riegel 66 versehen ist, der in eine Nut 67 des Abtriebskörpers 1 eingreift. Die Feder 65 stützt sich hierbei gegen eine mit dem Käfig verbundene Scheibe 68 ab, deren freies Ende in den Bereich der Kugeln 3 abgekantet ist und diese vermittels von durch Schlitze gebildeten Stegen eingrenzt und führt. Mit dem Abtriebskörper 1 verbunden ist eine Kappe 69, welche im Raume P eine den Käfig 4 vorspannende Federanordnung aufnimmt, die in der Figur nicht dargestellt ist. Mit der durch diese Feder bewirkte Vorspannung des Käfigs 4 werden die Kugeln 3 in Ausnehmungen 11 und 21 geführt, wobei die Kraft der Feder das Nennmoment der Überlastkupplung bestimmt. Bei gleicher Ausbildung der Ausnehmungen 11 und 21 wird die Hälfte der Federkraft von der Ausnehmung 11 aufgenommen und damit direkt über den Boden der Kappe 69 abgeführt. Die andere Hälfte der Federkraft wird von den Ausnehmungen 21 aufgenommen und über das durch die Kugeln 48 gebildete Schrägkugellager abgestützt. Werden nunmehr die Bohrspindel und damit der Abtriebskörper 101 über die halbe Kraft der den Käfig 4 vorspannenden Feder hinaus beansprucht, so ist das die Kugeln 48 aufweisende Schrägkugellager nicht mehr belastet, und der Abtriebskörper gleitet in der Fig. 10 nach links und damit tiefer in den Antriebskörper 2 hinein. Dadurch aber verschieben sich die Ausnehmungen 11 relativ zu den durch die Ausnehmung 21 noch abgestützten Kugeln 3, so daß der Angriffswinkel zwischen den Flanken der Ausnehmungen 11 und den Kugeln durch diese Verschiebung flacher wird und das Nennmoment der Überlastkupplung entsprechend abfällt. Erreicht das nunmehr erniedrigte Nennmoment den Wert des übertragenen Drehmomentes, so schaltet die Kupplung in an sich bekannter Weise ab. Zwar wird durch das gleichzeitige Verschieben des Bodens der Kappe 69 die im Raume P untergebrachte Feder stärker angespannt: Durch geeignete Auslegung der Kennlinie der Feder jedoch läßt sich diese Erhöhung der Federkraft in solchen Grenzen halten, daß der angestrebte Effekt ungeachtet dieser Erhöhung erreicht wird. Weiterhin läßt sich, bspw. auch dann, wenn die halbe Kraft der Feder sich als Nennkraft für das Abschalten infolge überhöhter Axialkraft nicht eignet, im Raume N eine zusätzliche, gegebenenfalls ebenfalls einstellbare Feder unterbringen, die als Druckfeder oder als Zugfeder ausgebildet sein kann, um die gewünschte, das Abschalten auslösende Nennkraft zu erreichen. Damit aber läßt sich einerseits ein Abschalten beim Überschreiten des Nennmomentes erreichen, wobei die Überlastkupplung nicht nur die Bohrspindel stillsetzt, sondern auch noch in der Lage ist, einen gegebenenfalls noch wirksamen Vorschub aufzunehmen. Andererseits kann, bspw. wenn die Spitze eines Bohrers abgestumpft ist, durch den Vorschub die zulässige Vorschubkraft überschritten werden. Hierdurch wird der Abtriebskörper 1 gegen die Kraft der im Raume P sowie gegebenenfalls im Raume N vorgesehenen Feder nach links verschoben; hierdurch wiederum wird das Nennmoment reduziert und bei Überschreiten dieses reduzierten Nennmomentes der Antrieb des Bohrers stillgesetzt. Auch hier vermag die Überlastkupplung noch, einen gegebenenfalls noch bestehenden Vorschub der Bohrspindel aufzunehmen.

Zwar ist bei den beschriebenen Ausführungsbeispielen immer zwischen Antriebskörper 2 und Abtriebskörper 1 unterschieden worden; die Kupplungen sind im allgemeinen symmetrisch aufgebaut und lassen sich daher auch in umgekehrtem Sinne einsetzen, so daß der jeweils benannte Abtriebskörper 1 angetrieben wird und der Antriebskörper 2 das übernommene, begrenzte Drehmoment weitergibt. Nach dem Ausrücken laufen die Kugeln auf Umlaufbahnen und nehmen hierbei ihren Käfig 4 mit, der mit einem durch die ihn vorspannenden Federn bedingten Restmoment belastet ist. Dieses durch die Federn, im Falle des Ausführungsbeispieles der Fig. 4 auch durch Dichtungen 37, bestimmte Restmoment läßt sich im Bedarfsfalle beeinflussen. Bei der Verwendung der meist beschriebenen Tellerfedern 10 ergibt sich ein Restmoment, das durch die jeweilige Federkraft, den Reibwert von Stahl auf Stahl sowie den Innendurchmesser dieser Ringfedern bestimmt ist. Durch Parallelschaltung gesonderter Reibflächen oder auch durch Zwischenschaltung von einen höheren Reibwert aufweisenden Scheiben läßt sich das Restmoment steigern, während durch Zwischenschaltung von einen günstigeren Reibwert bildenden Scheiben oder eine Abstützung über ein gesondertes Lager 97 gemäß Fig. 8 das Restmoment verringert und praktisch zum Verschwinden gebracht werden kann. Beim Umlaufen der Kupplungskörper ist es nicht unbedingt nötig, diese auf den Umlaufbahnen beider Hauptkörper der Kupplungen, nämlich des Antriebskörpers und des Abtriebskörpers, gleichzeitig laufen zu lassen. In vielen Fällen wird man diese Laufbahnen unterschiedlich hoch ausführen, so daß die Kupplungskörper während ihres Umlaufes sich im wesentlichen auf eine der Umlaufbahnen abstützen. Die Kupplungskörper sind zwar in den meisten Fällen als Kugeln dargestellt, es können aber auch anders geformte Kupplungskörper verwendet werden, so bspw. auf Achsbolzen gelagerte oder sich frei drehende Rollen, die nach Fig. 4 zweiteilig ausgeführt sein können, aber auch als bspw. zylindrische oder konische Wälzkörper ausgeführt sein können. Während Begrenzungsanschläge in ihrer Breite so ausgeführt sind, daß sie praktisch in jedem Falle von aus den Ausnehmungen herausgehobenen Kupplungskörpern diese oder ihren Käfig zu arretieren vermögen, sind Auslenkanschläge so ausgeführt, daß sie nur geringfügig in den Weg von ausgeho-benen Kupplungskörpern oder deren Käfigen eingreifen und beim schon geringen Einrücken der Wälzkörper in ihre Ausnehmungen deren Weg freigeben. In allen diesen Fällen wird die Aufgabe gelöst, den Weg der Kupplungskörper so zu steuern, daß einerseits nach dem Ausrücken sich nur geringe Restmomente ergeben und insbesondere bei Ausrückkupplungen ein ungewolltes Wiedereinrücken sicher vermieden ist, während beim Einrücken der Wälzkörper gesichert wird, daß diese gleichzeitig einrücken und somit beim Einrücken keine Minderung des Nennmomentes zu befürchten ist.

## Patentansprüche

1. Überlastkupplung mit zwei Hauptkörpern (1, 2), deren einer kraftangetrieben als Antriebskörper (2) Drehmomente auf den anderen, den Abtriebskörper (1), zu übermitteln vermag, bei der die Hauptkörper sich über eine Trennfuge einander gegenüberstehende Umlaufbahnen (12, 22) und diese unterbrechende, sich ergänzende Ausnehmungen (11, 21) aufweisen, in die hinein vermittels von Federn (10) vorgespannte, Drehmomente übertragende, in einem Käfig (4) geführte Kupplungskörper (Kugeln 3) einführbar sind, die beim Überschreiten des Nennmomentes der Überlastkupplung mittels in Umfangsrichtung vorgesehener schräger Flanken der Ausnehmungen gegen die Kraft der Federn aus den Ausnehmungen auf die deren Flankenenden verbindende Umlaufbahnen anhebbar sind, wobei die Kupplungskörper (Kugeln 3) in dem sie stützenden Käfig (4) axial sowie im vorgegebenen Teilungsabstand geführt sind, **dadurch gekennzeichnet,** daß mindestens einer der Hauptkörper (1, 2) mit einer die Anzahl der Kupplungskörper (Kugeln 3) unterschreitenden Anzahl von Anschlägen, vorzugsweise einem Anschlag (Begrenzungsanschlag 5, Auslenkanschlag 6), ausgestattet ist, wobei der Anschlag einer Ausnehmung (11, 12) des Hauptkörpers (1, 2) gegenübersteht bzw. zumindest annähernd auf einer Teilungsebene (T2, T3) der Ausnehmungen liegt.

2. Überlastkupplung mit zwei Hauptkörpern (1, 2), deren einer kraftangetrieben als Antriebskörper (2) Drehmomente auf den anderen, den Abtriebskörper (1), zu übermitteln vermag, bei der die Hauptkörper sich über eine Trennfuge einander gegenüberstehende Umlaufbahnen (12, 22) und diese unterbrechende, sich ergänzende Ausnehmungen (11, 21) aufweisen, in die hinein vermittels von Federn (10) vorgespannte, Drehmomente übertragende, in einem Käfig (4) geführte Kupplungskörper (Kugeln 3) einführbar sind, die beim Überschreiten des Nennmomentes der Überlastkupplung mittels in Umfangsrichtung vorgesehener schräger Flanken der Ausnehmungen gegen die Kraft der Federn aus den Ausnehmungen auch die deren Flankenenden verbindende Umlaufbahnen anhebbar sind,

wobei die Kupplungskörper (Kugeln 3) in dem sie stützenden Käfig (4) axial sowie im vorgegebenen Teilungsabstand geführt sind,

**dadurch gekennzeichnet,**

daß mindestens einer der Hauptkörper (1, 2) mit mindestens einem Anschlag (Begrenzungsanschlag 53, 54, Auslenkanschlag 6) ausgestattet ist, der in den Weg mindestens eines am Käfig (4) vorgesehenen Anschlages (23) eingreift.

3. Überlastkupplung nach Anspruch 2,
**dadurch gekennzeichnet,**
daß die Anschläge (6, 53, 54) des bzw. der Hauptkörper (1, 2) in jenen Weg eingreifen, welchen der am Käfig (4) angeordnete Anschlag (23) nach Ausheben der von ihm geführten Kupplungskörper (Kugeln 3) aus den Ausnehmungen (11, 21) nimmt.

4. Überlastkupplung nach einem der Ansprüche 1 bis 3, bei der als Kupplungskörper vorgesehene Kugeln in einem Käfig geführt sind,
**dadurch gekennzeichnet,**
daß der Käfig (4) für jede Kugel (3) eine Vertiefung (15) zur Aufnahme einer Kappe der Kugel aufweist, wobei die Vertiefungen in Umlaufrichtung der Kugeln deren Kappen unter jeweiliger Einhaltung eines Spieles einschließen.

5. Überlastkupplung nach Anspruch 4,
**dadurch gekennzeichnet,**
daß die Vertiefungen (15) kalottenförmig ausgebildet sind, und daß der Radius der Kalotten den der Kugeln (3), vorzugsweise geringfügig, überschreitet.

6. Überlastkupplung nach einem der Ansprüche 1 bis 5,
**dadurch gekennzeichnet,**
daß einer der Hauptkörper (1, 2) Ausnehmungen (11, 21) in gleicher Teilung aufweist und in eine der Ausnehmungen (12) ein Begrenzungsanschlag (52) eingesetzt ist.

7. Überlastkupplung nach einem der Ansprüche 3 bis 6,
**dadurch gekennzeichnet,**
daß bei mit einander zusammenwirkenden, an einem Käfig (4) und einem Hauptkörper (1, 2) vorgesehenen Anschlägen (23, 53, 54) diese in Bewegungsrichtung rampenartig oder schraubenlinienförmig schräg ansteigend ausgeführt sind.

8. Überlastkupplung nach einem der Ansprüche 1 bis 7,
**dadurch gekennzeichnet,**
daß ein Hauptkörper (1, 2) und ein Käfig (4), die mit den Weg der Kupplungskörper (3) begrenzenden Anschlägen (19, 56) ausgestattet sind, eine in der Begrenzungslage wirksame auslösbare Rastvorrichtung oder Riegelvorrichtung (19, 17; 19, 57) aufweisen.

9. Anordnung nach einem der Ansprüche 1 bis 8,
**dadurch gekennzeichnet,**
daß Hauptkörper (1, 2) mit Auslenkanschlägen (6) ausgestattet sind, die mittig in der über eine Ausnehmung (11, 21) führenden, deren Flanken verbindenden Bewegungsbahn eines aus den Ausnehmungen herausgedrückten Kupplungskörpers so hoch über der zugeordneten Umlaufbahn (12, 22) angeordnet sind, daß ein Kupplungskörper nach nur teilweisem Einrücken in Ausnehmungen sie zu passieren vermögen.

10. Überlastkupplung nach einem der Ansprüche 1 bis 9,
**dadurch gekennzeichnet,**
daß Hauptkörper (1, 2) mit Auslenkanschlägen (6) ausgestattet sind, die in die Bewegungsbahn von Anschlägen (23) an einem durch Ausrücken der Kupplungskörper (3) aus Ausnehmungen (11, 21) angehobenen Käfigs (4) so weit eingreifen, daß der Käfig nach Absenken desselben durch mindestens teilweises Einrücken der Wälzkörper in Ausnehmungen sie zu passieren vermag.

11. Überlastkupplung nach einem der Ansprüche 1 bis 10,
**dadurch gekennzeichnet,**
daß ein Hauptkörper (1, 2) mit einer mittels einer Feder (75) in eine Ausgangsstellung vorgespannten, schwenkbaren Klinke (71) ausgestattet ist, und daß beim Ausheben der Kupplungskörper (3) aus den Ausnehmungen (11, 21) ein mindestens eine Nut (72) aufweisender ringförmiger Oberflächenbereich (74) eines die Kupplungskörper führenden Käfigs (4) in den Wirkungsbereich der Spitze der Klinke (71) angehoben wird.

12. Überlastkupplung insbesondere nach einem der Ansprüche 1 bis 11,
**dadurch gekennzeichnet,**
daß der Käfig (4) oder ein die Kupplungskörper (3) abstützender, mit einem der Hauptkörper (1, 2) drehfest verbundener Druckring mindestens einen zahnartigen Vorsprung ( 82 ) aufweist, der in ausgerücktem Zustande der Überlastkupplung über einer ringförmigen Stützfläche ( 86 ) des gegenüberliegenden Hauptkörpers ( 2 ) steht, und der beim Einrücken der Überlastkupplung in eine ihm und seiner beim Einrücken zurückgelegten Bewegungsbahn formschlüssig angepaßte Nut ( 83 ) dieser Stützfläche eingreift.

13. Überlastkupplung nach Anspruch 12,
**dadurch gekennzeichnet,**
daß mindestens zwei einander diametral gegenüberstehende Zähne ( 82, 84 ) und diese aufnehmende Nute (83, ( 83, 85 ) vorgesehen sind, die zum Einrasten in einer 360°-Teilung in unterschiedlichen Abständen von der Drehachse vorgesehen sind.

14. Überlastkupplung nach Anspruch 12,
**dadurch gekennzeichnet,**
daß zum Einrasten in einer 360°-Teilung beim Vorliegen einer ungeraden Anzahl von Ausnehmungen zwei einander diametral gegenüberliegend angeordnete Zähne (82) und diese aufnehmende Nute (83) innerhalb gleicher Abstände von der Drehachse vorgesehen sind.

15. Überlastkupplung nach einem der Ansprüche 1 bis 14,
**dadurch gekennzeichnet,**
daß die Hauptkörper (1, 2) drehbar ineinander gelagert sind, und daß der in einem am äußeren der Hauptkörper vorgesehenen Mantel (24) geführte Käfig (40) derart gegen dessen Wandung sowie den Umfang des inneren Hauptteiles abgedichtet (37) ist, daß, zweckmäßig beidseitig des Käfigs, druckmittelbeaufschlagbare Räume (P, M) gebildet sind.

16. Überlastkupplung nach Anspruch 15,
**dadurch gekennzeichnet,**
daß der Käfig (40) durch eine Feder vorgespannt ist, deren resultierende Kraft durch Druckmittelbeaufschlagung der Räume (P und/oder M) abänderbar ist.

17. Überlastkupplung nach einem der Ansprüche 1 bis 16,
**gekennzeichnet durch**
kolbenartig (18, 19, 34) ausgebildete, druckmittelbeaufschlagbare Anschläge und/oder Riegel (19, 34).

18. Überlastkupplung nach einem der Ansprüche 1 bis 17,
**dadurch gekennzeichnet,**
daß deren Hauptkörper (1, 2) mittels eines gegenseitiges Schwenken ihrer Achsen zulassenden Pendellagers (62 bis 64) gegeneinander abgestützt sind.

19. Überlastkupplung nach einem der Ansprüche 1 bis 18,
**dadurch gekennzeichnet,**
daß einer der Hauptkörper (1, 2) den in ihm über ein einseitig beanspruchbares Axiallager (48) gelagerten anderen Hauptkörper weitgehend übergreift, und daß die den Käfig (4) vorspannende Feder sich am inneren der Hauptteile abstützt.

20. Überlastkupplung nach einem der Ansprüche 1 bis 19,
**dadurch gekennzeichnet,**
daß Kupplungskörper als zwei auf einem gemeinsamen, am Käfig (40) angeordneten Bolzen (33) axial verschieblich gelagerte Rollen (31, 32) mit wulstförmig ausgebildeten Mänteln ausgeführt sind, und daß die Umlaufbahnen (12, 22) sowie deren Ausnehmungen (11, 21) mit einem dem der Wulstränder unter Einhaltung eines Spieles angepaßten Profil ausgeführt sind.

21. Überlastkupplung nach einem der Ansprüche 1 bis 20,
**dadurch gekennzeichnet,**
daß einem Umlaufkörper eine auf den Käfig wirkende Bremsvorrichtung zugeordnet ist.

**Claims**

1. An overload coupling having two main bodies (1, 2) of which one when power-driven as the driving body (2) is capable of transmitting torque to the other, driven body (1), where the main bodies exhibit circular tracks (12, 22) facing one another acroos a gap and complementary recesses (11, 21) interrupting them, into which torque-transmitting couplingbodies (balls 3) prestressed by means of springs (10) may be introduced, which are guided in a cage (4) and which upon the normal torque of the overload coupling being exceeded may by means of oblique flanks to the recesses, provided in the circumferential direction, be raised from the recesses onto the circular tracks connecting their flank ends, the coupling bodies (balls 3) being guided axially as well as at the predetermined pitch in the cage (4) which supports them,
**characterized in that**
at least one of the main bodies (1, 2) is equipped with stops fewer in number than the number of coupling bodies (balls 3), preferably with one stop (limit stop 5, deflector stop 6), where the stop lies opposite one recess (11, 12) in the main body (1, 2) or respectively at least approximately on one pitch plane (T2, T3) of the recesses.

2. An overload coupling having two main bodies (1, 2) of which one when power-driven as the driving body (2) is capable of transmitting torque to the other, driven body (1), where the main bodies exhibit circular tracks (12, 22) facing one another acroos a gap and complementary recesses (11, 21) interrupting them, into which torque-transmitting couplingbodies (balls 3) prestressed by means of springs (10) may be introduced, which are guided in a cage (4) and which upon the normal torque of the overload coupling being exceeded may by means of oblique flanks to the recesses, provided in the circumferential direction, be raised from the recesses onto the circular tracks connecting their flank ends, the coupling bodies (balls 3) being guided axially as well as at the predetermined pitch in the cage (4) which supports them,
**characterized in that**
at least one of the main bodies (1, 2) is equipped with at least one stop (limit stop 53, 54, deflector stop 6) which intercepts the path of at least one stop (23) provided on the cage (4).

3. An overload coupling as in Claim 2,
**characterized in that**
the stops (6, 53, 54) on the main body or bodies (1, 2) intercept that path which the stop (23) arranged on the cage (4) takes after the coupling bodies (balls 3) guided by the latter have been raised from the recesses (11, 21).

4. An overload coupling as in one of the Claims 1 to 3,
in which balls provided as coupling bodies are guided in a cage,
**characterized in that**
the cage (4) exhibits for each ball (3) a depression (15) for receiving one cap of the ball, the depressions in the direction circumferential to the balls enclosing their caps whilst maintaining clearance from each.

5. An overload coupling as in Claim 4,
**characterized in that**
the depressions (15) are made cupshaped and that the radius of the cups preferably slightly exceeds that of the balls (3).

6. An overload coupling as in one of the Claims 1 to 5,
**characterized in that**

one of the main bodies (1, 2) exhibits recesses (11, 21) at equal pitch and a limit stop (52) is inserted in one of the recesses (12).

7. An overload coupling as in one of the Claims 3 to 6,
**characterized in that**
in the case of stops (23, 53, 54) provided on one cage (4) and one main body (1, 2) to cooperate with one another, they are made ramplike in the direction of motion or with an oblique rise spirally.

8. An overload coupling as in one of the Claims 1 to 5,
**characterized in that**
one main body (1, 2) and one cage (4) which are equipped with stops (19, 56) limiting the travel of the coupling bodies (3), exhibit a releasable catch mechanism or bolt mechanism (19, 17; 19, 57) effective in the limiting position.

9. An arrangement as in one of the Claims 1 to 8,
**characterized in that**
main bodies (1, 2) are equipped with deflector stops (6) which are arranged centrally in the path of motion leading via a recess (11, 21) and connecting its flanks, of a coupling body forced out of the recesses, and of such a height above the associated circular track (12, 22) that a coupling body after only partial entry into recesses is capable of moving past them.

10. An overload coupling as in one of the Claims 1 to 9,
**characterized in that**
the main bodies (1, 2) are equipped with deflector stops (6) which engage so far in the path of motion of stops (23) on a cage (4) raised through disengaging the coupling bodies (3) from recesses (11, 21), that the cage after lowering it through at least partial entry of the roller bodies into recesses is capable of moving past them.

11. An overload coupling as in one of the Claims 1 to 10,
**characterized in that**
one main body (1, 2) is equipped with a pivoted pawl (71) which is prestressed by means of a spring (75) into a starting position and that upon lifting the coupling bodies (3) out of the recesses (11, 21) an annular surface region (74) which exhibits at least one groove (72) on a cage (4) which guides the coupling bodies is lifted into the working range of the tip of the pawl (71).

12. An overload coupling especially as in one of the Claims 1 to 11,
    **characterized in that**
    the cage (4) or a pressure-ring which supports the coupling bodies (3) and is connected to rotate with one of the main bodies (1, 2) exhibits at least one toothlike projection (82) which in the disengaged state of the overload coupling lies above an annular supporting area (86) of the opposite main body (2) and which upon engaging the overload coupling engages in a groove (83) in the said supporting area, which is adapted to fit closely the said projection and the path of motion it covers upon engagement.

13. An overload coupling as in Claim 12,
    **characterized in that**
    at least two teeth (82, 84) lying diametrically opposite one another and grooves (83, 85) to receive them are provided, which for snapping in at 360° pitch are provided at different distances from the axis of rotation.

14. An overload coupling as in Claim 12,
    **characterized in that**
    for snapping in at 360° pitch in the event of there being an odd number of recesses two teeth (82) arranged diametrically opposite one another and grooves (83) to receive them are provided within equal distances from the axis of rotation.

15. An overload coupling as in one of the Claims 1 to 14,
    **characterized in that**
    the main bodies (1, 2) are supported to be able to turn in one another and that the cage (40) guided in a shell (24) provided on the outer of the main bodies is sealed (37) from its wall as well as from the circumference of the inner main body in such a way that spaces (P, M) are formed, usefully on both sides of the cage, which may be acted upon by pressure medium.

16. An overload coupling as in Claim 15,
    **characterized in that**
    the cage (40) is prestressed by a spring the force resulting from which may be modified by acting upon the spaces (P and/or M) by pressure medium.

17. An overload coupling as in one of the Claims 1 to 16,
    **characterized by**
    stops and/or bolts made like pistons (18, 19, 34) able to be acted upon by pressure medium.

18. An overload coupling as in one of the Claims 1 to 17,
    **characterized in that**
    its main bodies (1, 2) bear against one another by means of a self-aligning bearing (62 to 64) allowing mutual tilting of their axes.

19. An overload coupling as in one of the Claims 1 to 18,
    **characterized in that**
    one of the main bodies (1, 2) largely overlaps the other main body which is supported in it via an axial bearing (48) which may be acted upon at one side, and that the spring prestressing the cage (4) bears against the inner of the main parts.

20. An overload coupling as in one of the Claims 1 to 19,
    **characterized in that**
    the coupling bodies are made as rollers (31, 32) having domed surfaces and supported to be able to shift axially on a common pin (33) arranged on the cage (40), and that the circular tracks (12, 22) as well as their recesses (11, 21) are made with a profile adapted to the domed edges whilst maintaining a clearance.

21. An overload coupling as in one of the Claims 1 to 14,
    **characterized in that**
    a brake mechanism acting on the cage is associated with one rotating body.

**Revendications**

1. Accouplement de sûreté réagissant aux surcharges, qui comprend deux corps principaux (1, 2) dont l'un (2), qui assure l'entraînement et ent entraîné par un moteur, peut transmettre des moments de rotation à l'autre (1), le corps entraîné, et dans lequel les corps principaux comportent des chemins de rotation (12, 22) situés l'un en face de l'autre de part et d'autre d'un joint de séparation, etdes évidements (11, 21) qui les interrompent et se complètent réciproquement et dans lesquels peuvent s'engager des corps d'accouplement (billes 3) qui sont guidés dans une cage (4), sont soumis à l'action d'un ressort (10) et transmettent des moments de rotation et qui, lorsque le moment de rotation nominal de l'accouplement de sûreté est dépassé, peuvent, sous l'action des flancs obliques des évidements orientés dans le sens périphérique et en s'opposant à la force du ressort (10), sortir des évidements et se placer sur les chemins de rotation qui relient les extrémités des flancs, les corps d'accouplement (billes 3) étant guidés, dans le sens axial à des distances correspondant aux divisions fixées, dans la cage (4) qui les maintient, caractérisé en ce que l'un au moins des corps principaux (1, 2) comporte un nombre de butées inférieur au nombre des corps d'accouplement (billes 3), de préférence une seule butée (butée de limitation 5, butée de déviation 6), cette butée étant placée en face d'un évidement (11, 12) du corps principal (1, 2) ou se trouvant au moins approximativement dans un plan de subdivision ($T_2$, $T_3$) des évidements.

2. Accouplement de sûreté réagissant aux surcharges, qui comprend deux corps principaux (1, 2) dont l'un (2), qui assure l'entraînement et est entraîné par un moteur, peut transmettre des moments de rotation à l'autre (1), le corps entraîné, et dans lequel les corps principaux comportent des chemins de rotation (12, 22) situés l'un en face de l'autre de part et d'autre d'un joint de séparation, et des évidements (11, 21) qui les interrompent et se complètent réciproquement et dans lesquels peuvent s'engager des corps d'accouplement (billes 3) qui sont guidés dans une cage (4), sont soumis à l'action d'un ressort (10) ettransmettent des moments de rotation et qui, lorsque le moment de rotation nominal de l'accouplement de sûreté est dépassé, peuvent, sous l'action des flancs obliques des évidements orientés dans le sens périphérique et en s'opposant à la force du ressort (10), sortir des évidements et se placer sur les chemins de rotation qui relient les extrémités des flancs, les corps d'accouplement (billes 3) étant guidés, dans le sens axial et à des distances correspondant aux divisions fixées, dans la cage (4) qui les maintient, caractérisé en ce que l'un au moins des corps principaux (1, 2) comporte au moins une butée (butée de limitation 53, 54, butée de déviation 6) qui intervient sur le trajet d'au moins une butée (23) placée sur la cage (4).

3. Accouplement de sûreté selon la revendication 2, caractérisé en ce que les butées (6, 53, 54) du ou des corps principaux (1, 2) interviennent sur le trajet que la butée (23) placée sur la cage (4) suit après que les corps d'accouplement (billes 3) guidés par elle sont sortis des évidements (11, 21).

4. Accouplement de sûreté selon une des revendications 1 à 3, dans lequel les billes constituant les corps d'accouplement sont guidées dans une cage, caractérisé en ce que la cage (4) comporte, pour chaque bille (3), un renfoncement (15) destiné à recevoir une calotte sphérique de la bille, les renfoncements disposés dans le sens de rotation des billes entourant leurs calottes sphériques en leur laissant un certain jeu.

5. Accouplement de sûreté selon la revendication 4, caractérisé en ce que les renfoncements ont une forme de calottes concaves et en ce que le rayon de ces calottes dépasse, de préférence de peu, celui des billes.

6. Accouplement de sûreté selon une des revendications 1 à 5, caractérisé en ce que l'un des corps principaux (1, 2) comporte des évidements (11, 21) uniformément répartis et qu'une butée de limitation (52) est placée dans l'un de ces évidements (12).

7. Accouplement de sûreté selon une des revendications 3 à 6, caractérisé en ce que, lorsqu'il comporte des butées (23, 53, 54) qui coopèrent les unes avec les autres en étant placées sur une cage (4) et sur un corps principal (1, 2), ces butées sont constituées par des rampes ou des surfaces hélicoïdales montant obliquement dans le sens du déplacement.

8. Accouplement se sûreté selon une des revendications 1 à 7, caractérisé en ce qu'un corps principal (1, 2) et une cage (4) qui comportent des butées (19, 56) qui limitent le trajet des corps d'accouplement (3) comportent un dispositif d'arrêt ou de verrouillage (1ç, 17; 19, 57) qui peut fonctionner dans la position de limitation.

9. Dispositif selon une des revendications 1 à 8, caractérisé en ce que des corps principaux (1, 2) comportent des butées de déviation (6) qui sont placées dans une position médiane sur un. chemin de déplacement qui est suivi par un corps d'accouplement dégagé des évidements et passe au-dessus d'un évidement (11, 21) dont il relie les flancs et qui sont situées assez haut au-dessus du chemin de rotation correspondant (12, 22) pour qu'un corps d'accouplement puisse les dépasser après une pénétration partielle dans les évidements.

10. Accouplement de sûreté selon une des revendications 1 à 9, caractérisé en ce que les corps principaux (1, 2) comportent des butées de déviation (6) qui interviennent sur le chemin de déplacement de butées (23) placées sur une cage (4), écartée des évidements (11, 21) par suite du dégagement des corps d'accouplement (3), suffisamment loin pour qu'après son abaissement dû à une pénétration au-moins partielle des éléments de roulement dans les évidements, la cage puisse dépasser ceux-ci.

11. Accouplement de sûreté selon une des revendications 1 à 10, caractérisé en ce qu'un corps principal (1, 2) est équipé d'un cliquet (71) qui peut pivoter et est poussé dans une position de départ par un ressort (75) et en ce que, lorsque le corps d'accouplement (3) est dégagé des évidements (11, 21), une partie (74) de surface annulaire d'une cage (4) de guidage des corps d'accouplement comportant au moins une rainure (72) est amenée dans le zone d'action de la pointe du cliquet (71).

12. Accouplement de sûreté selon une des revendications 1 à 11, caractérisé en ce que la cage (4) ou un anneau de pression qui assure l'appui des corps d'accouplement (3) et est relié sans possibilité de rotation relative à l'un des corps principaux (1, 2) comportent au moins une partie saillante (82) en forme de dent qui, lorsque l'accouplement de sûreté est débrayé, se trouve audessus d'une surface d'appui annulaire (86) du corps principal opposé (2) et qui, lorsque l'accouplement de sûreté est embrayé, s'engage dans une rainure (83) de cette surface d'appui dont la forme lui est adaptée ou est adaptée au chemin de déplacement parcouru pendant l'embrayage.

13. Accouplement de sûreté selon la revendication 12, caractérisé en ce qu'il comporte deux dents (82, 84) diamétralement opposées et des rainures (83, 83, 85) qui les reçoivent et, pour l'engagement dans une division sur 360$^\circ$, sont situées à différentes distances de l'axe de rotation.

14. Accouplement de sûreté selon la revendication 12, caractérisé en ce que, pour l'engagement dans une division sur 360$^\circ$ lorsque le nombre des évidements est impair, il comporte deux dents (82) diamétralement opposées et des rainures (83) qui les reçoivent et sont aux mêmes distances de l'axe de rotation.

15. Accouplement de sûreté selon une des revendications 1 à 14, caractérisé en ce que les corps principaux (1,2) sont montés de manière à pouvoir tourner l'un dans l'autre et en ce que la cage (40) qui est guidée dans une enveloppe (24) montée sur celui des corps principaux qui est à l'extérieur est hermétiquement isolée (37) de la paroi de ce corps et du pourtour de la pièce principale intérieure de manière à réaliser,de préférence des deux côtés de la cage, des cavités (P,M) pouvant être soumises à l'action d'un milieu de pression.

16. Accouplement de sûreté selon la revendication 15, caractérisé en ce que la cage (40) est soumisé à l'action d'un ressort dont la force résultante peut être modifiée par l'action du milieu de pression dans les cavités (P et/ou M).

17. Accouplement de sûreté selon une des revendications 1 à 16, caractérisé par des butées et/ou des verrous (19, 34) en forme de pistons (18, 19, 14) pouvant être soumis à l'action d'un milieu de pression.

18. Accouplement de sûreté selon une des revendications 1 à 16, caractérisé en ce que ses corps principaux (1, 2) prennent appui l'un contre l'autre au moyen d'un palier à réglage automatique (62 à 64) permettant un pivotment réciproque de leurs axes.

19. Accouplement de sûreté selon une des revendications 1 à 18, caractérisé en ce que l'un des corps principaux (1,2) entoure largement l'autre corps principal monté à l'intérieur par l'intermédiaire d'un palier axial (48) pouvant être soumis à une action d'un côté et en ce que le ressort qui agit sur la cage (4) prend appui à l'intérieur des pièces principales

20. Accouplement de sûreté selon une des revendications 1 à 19, caractérisé en ce que les corps d'accouplement sont constitués par des rouleaux (31, 32) montés de manière à pouvoir se déplacer dans le sens axial sur un boulon commun (33) monté sur la cage (40) et munis d'enveloppes en forme de bourrelets et en ce que les chemins de rotation (12, 22) ainsi que leurs évidements (11, 21) présentent un profil adapté à celui des bords en bourrelets avec un certain jeu.

21. Accouplement de sûreté selon une des revendications 1 à 20, caractérisé en ce qu'en avant d'un corps de rotation il comporte un dispositif de freinage agissant sur la cage.

FIG. 1

EP 0 258 892 B1

FIG. 2

T2    T3    T4

3    52    22    21

2

FIG. 2a

D    L    6    R    C    B

28

54    53

4    23

3    A    27

26

FIG. 3

FIG 4

EP 0 258 892 B1

FIG. 4a

FIG 5 a          FIG 5 b          FIG 5 c

EP 0 258 892 B1

FIG 6

FIG 7

FIG 8

EP 0 258 892 B1

FIG 9

FIG 10